# EUROPEAN PATENT APPLICATION

(11) **EP 4 813 775 A1**
(43) Date of publication of application: **30.09.2026**
(21) Application number: 25854864.3
(22) Date of filing: 12.08.2025
(51) Int. Cl.: B60W 20/14, B60W 10/06, B60W 10/08, B60W 30/18, B60K 6/26

(54) **HYBRID VEHICLE**

(30) Priority: 12.08.2024 KR 20240107818
(71) Applicant: LG Energy Solution, Ltd., Seoul 07335 (KR)
(72) Inventor: GU, Min-Ji, Daejeon 34122 (KR); BAE, Yoon-Jung, Daejeon 34122 (KR); JEONG, Hee-Seok, Daejeon 34122 (KR); CHA, A-Ming, Daejeon 34122 (KR)
(74) Representative: Goddar, Heinz J.
(86) International application number: PCT/KR2025/012241
(87) International publication number: WO 2026/038867

(57) **Abstract**

A hybrid electric vehicle according to one embodiment of the present disclosure includes a motor; a battery configured to output electric energy to the motor; and an engine connected to the motor. In the EV driving mode, the motor operates up to a first speed of the vehicle, in the HEV driving mode, the motor and the engine operate from the first speed to a second speed, and the first speed and the second speed are variable.

## Description

### TECHNICAL FIELD

This application is based on and claims priority from Korean Patent Application No. 10-2024-0107818, filed on August 12, 2024, with the Korean Intellectual Property Office, the disclosure of which is incorporated herein in its entirety by reference.

The present disclosure relates to a vehicle, and more particularly, to a hybrid electric vehicle.

### BACKGROUND ART

Traditionally, vehicles have used fuel cells as a power source. However, since performance degradation may occur in operating areas where fuel cell efficiency is low, hybrid electric vehicles have been developed that utilize both fuel cells and batteries as separate power sources.

A hybrid electric vehicle may include a motor and an engine driven by electric energy stored in a battery.

### DISCLOSURE

### Technical Problem

The problem that this specification seeks to solve is to provide a hybrid electric vehicle that may improve the life of a first battery that is charged in a plug-in manner.

Another problem that this specification seeks to solve is to provide a hybrid electric vehicle capable of controlling the connection between the first battery and the motor in order to charge a second battery, which is placed independently of the first battery that is charged in a plug-in manner, in a regenerative braking mode.

Another problem that this specification seeks to solve is to provide a hybrid electric vehicle in which the second battery, which is charged in a regenerative braking mode, is easy to replace and repair.

Another problem that this specification seeks to solve is to provide a hybrid electric vehicle capable of delaying the degradation of the first battery by varying a first speed and a second speed, which serve as the standards for an EV driving mode, a HEV driving mode, and an ENG driving mode, depending on the degradation state of the first battery.

The tasks of this specification are not limited to those mentioned above, and other technical tasks may be inferred from the following embodiments.

### Technical Solution

A vehicle according to one aspect of the present disclosure may include a first battery; a second battery; a motor connected to the first battery and the second battery respectively; and a switch disposed between the first battery and the motor.

The connection between the first battery and the motor may be controlled by the switch.

The first battery may be charged in a plug-in manner, and the second battery may be charged in a regenerative braking mode.

The vehicle according to another aspect of the present disclosure may further comprise an engine connected to the motor, wherein in the regenerative braking mode, the motor may operate as a generator by recovering rotational energy of the engine.

The vehicle according to another aspect of the present disclosure may further comprise an electronic control device that controls the first battery, the second battery, the engine, and the motor, wherein the electronic control device may provide an off signal to the switch in the regenerative braking mode.

A front part, a rear part, and a middle part between the front part and the rear part may be defined, and the first battery may be located in the middle part.

The second battery may be located in the rear part or the front part.

The second battery may be provided in plurality.

A capacity of the second battery may be less than a capacity of the first battery.

An area of the second battery may be smaller than an area of the first battery.

A vehicle according to another aspect of the present disclosure may comprise a plug-in rechargeable battery; a regenerative braking rechargeable battery that is charged in a regenerative braking mode; a motor connected to the plug-in rechargeable battery and the regenerative braking rechargeable battery, respectively; and an engine connected to the motor.

The plug-in rechargeable battery and the regenerative braking rechargeable battery may be placed to be spaced.

In the regenerative braking mode, the motor may operate as a generator by recovering the rotational energy of the engine, and the electric energy generated from the motor in the regenerative braking mode may be charged to the regenerative braking rechargeable battery.

In the regenerative braking mode, the electric energy may not be supplied to the plug-in rechargeable battery.

The plug-in rechargeable battery may be connected one-way to the motor, and the regenerative braking rechargeable battery may be connected two-way to the motor.

A hybrid electric vehicle according to another aspect of the present disclosure having an EV driving mode and an HEV driving mode may comprise a motor; a battery configured to output electric energy to the motor; and an engine connected to the motor.

In the EV driving mode, the motor may operate up to a first speed of the vehicle.

In the HEV driving mode, the motor and the engine may operate from the first speed to a second speed, and
The first speed and the second speed may be variable.

The hybrid electric vehicle according to another aspect of the present disclosure may further comprise an electronic control device configured to control the motor, the battery, and the engine.

The electronic control device may vary the first speed and the second speed based on a power mode of the battery.

The hybrid electric vehicle according to another aspect of the present disclosure may further comprise a battery management device configured to determine the power mode of the battery.

The electronic control device may maintain the first speed and the second speed when the power mode of the battery is a normal mode.

The electronic control device may lower the first speed and the second speed to a first reference rate when the power mode of the battery is a warning mode.

The electronic control device may lower the first speed and the second speed to a second reference rate that is greater than a first reference rate when the power mode of the battery is an emergency mode.

The hybrid electric vehicle according to another aspect of the present disclosure may further include an ENG driving mode in which the engine operates from the second speed.

### Advantageous Effects

According to embodiments of the present specification, a second battery arranged independently of a first battery that is charged by a plug-in charging manner may be included. The second battery may be charged in a regenerative braking mode. A switch that is controlled on/off by an electronic control device (ECU) may be separately arranged between the first battery and the motor. Therefore, in the regenerative braking mode, the first battery is not charged, and only the second battery may be charged. The regenerative braking mode may refer to a mode that recovers some of the kinetic energy lost in the braking mode and converts it into electric energy. However, since the regenerative braking mode is a mode that is activated in a sudden environment, the conversion of kinetic energy into electric energy and the charging of the electric energy into the battery in the regenerative braking mode may occur intermittently. However, if the charging of the battery occurs intermittently, the performance and lifespan of the battery may deteriorate.

According to embodiments of the present specification, a second battery for regenerative braking charging is separately provided to improve the performance and lifespan of the first battery in a plug-in charging manner. Furthermore, in the regenerative braking mode, the switch is controlled so that electric energy generated by the motor is not transferred to the first battery, thereby improving the performance and lifespan of the first battery.

In addition, according to embodiments of the present disclosure, the second battery for regenerative braking charging may be located in the rear part or the front part of the vehicle. Since the second battery is for regenerative braking charging, it may have a smaller capacity than the first battery. Therefore, the second battery may be smaller in size than the first battery. Accordingly, the degree of freedom regarding the placement of the second battery may be much higher than the degree of freedom regarding the placement of the first battery, which must be located in the middle part. For example, if the second battery is located in the rear part or the front part, there is an advantage in that it may be easily repaired or replaced without removing the lower body of the vehicle.

In addition, according to the embodiments of the present specification, the degradation of the first battery may be delayed by varying the first speed and the second speed, which are the standards for the EV driving mode, the HEV driving mode, and the ENG driving mode, depending on the degradation state of the first battery.

However, the effects that can be obtained from the present disclosure are not limited to the effects mentioned above, and other effects that are not mentioned can be clearly understood by a person having ordinary skill in the art to which the present disclosure belongs from the description below.

### DESCRIPTION OF DRAWINGS

FIG. 1 is a perspective view of a hybrid electric vehicle according to one embodiment.
FIG. 2 is an exploded perspective view of the hybrid electric vehicle according to FIG. 1.
FIG. 3 is a drawing showing in detail the configuration of the hybrid electric vehicle according to FIG. 2.
FIG. 4 is a perspective view showing the first battery according to FIG. 3.
FIG. 5 is a perspective view showing the battery module of the first battery of FIG. 4.
FIG. 6 is a perspective view showing the exterior of the battery cell of FIG. 5.
FIG. 7 is an exploded perspective view of the battery cell of FIG. 6.
FIG. 8 is a drawing showing the specific configuration of the electric control unit according to FIG. 2.
FIG. 9 is a diagram showing the relationships between components of the electric control unit in an EV driving mode.
FIG. 10 is a diagram showing the relationships between components of a hybrid electric vehicle in an EV driving mode.
FIG. 11 is a diagram showing the relationships between components of the electric control unit in a HEV driving mode.
FIG. 12 is a diagram showing the relationships between components of a hybrid electric vehicle in a HEV driving mode.
FIG. 13 is a diagram showing the relationships between components of the electric control unit in an ENG driving mode.
FIG. 14 is a diagram showing the relationships between components of a hybrid electric vehicle in an ENG driving mode.
FIG. 15 is a diagram showing the relationships between components of the electric control unit in an RB driving mode.
FIG. 16 is a diagram showing the relationship between the components of a hybrid electric vehicle in an RB driving mode.
FIG. 17 is a detailed diagram illustrating in detail the configuration of a hybrid electric vehicle according to one embodiment.
FIG. 18 is a diagram illustrating the measurement of the open circuit voltage of a battery cell using the battery management system according to FIG. 17.
FIG. 19 is a flowchart illustrating a driving mode control method based on the degradation state of the first battery of a hybrid electric vehicle according to one embodiment.
FIG. 20 is a flowchart illustrating more detailed steps of FIG. 19.
FIG. 21 is a graph illustrating driving mode control in a normal mode of FIG. 20.
FIG. 22 is a graph illustrating driving mode control in a warning mode of FIG. 20.
FIG. 23 is a graph illustrating driving mode control in an emergency mode of FIG. 20.
FIG. 24 is an exploded perspective view of a hybrid electric vehicle according to another embodiment.
FIG. 25 is a drawing showing in detail the configurations of the hybrid electric vehicle according to FIG. 24.
FIG. 26 is a drawing showing the specific configurations of the electric control unit according to FIG. 25.
FIG. 27 is a drawing showing the relationships between the components of the electric control unit in an EV driving mode.
FIG. 28 is a drawing showing the relationships between the components of the hybrid electric vehicle in an EV driving mode.
FIG. 29 is a drawing showing the relationships between the components of the electric control unit in a HEV driving mode.
FIG. 30 is a drawing showing the relationships between the components of the hybrid electric vehicle in a HEV driving mode.
FIG. 31 is a drawing showing the relationships between the components of the electric control unit in an ENG driving mode.
FIG. 32 is a diagram showing the relationships between components of a hybrid electric vehicle in an ENG driving mode.
FIG. 33 is a diagram showing the relationships between components of an electric control unit in an RB driving mode.
FIG. 34 is a diagram showing the relationships between components of a hybrid electric vehicle in an RB driving mode.
FIG. 35 is a schematic diagram showing repair or replacement of the secondary battery in the hybrid electric vehicle according to FIG. 24.
FIG. 36 is a diagram showing in detail the components of a hybrid electric vehicle according to still another embodiment.
FIG. 37 is a schematic diagram showing repair or replacement of a secondary battery in the hybrid electric vehicle according to FIG. 36.

### BEST MODE

Hereinafter, embodiments will be described with reference to the drawings. In this specification, when a component (or region, layer, part, etc.) is referred to as being "on" another component or "connected" or "coupled" to another component, it means that it may be directly connected/coupled to another component, or a third component may be disposed between them.

Like reference numerals denote like components. Furthermore, in the drawings, the thicknesses, ratios, and dimensions of components are exaggerated for the purpose of effectively illustrating the technical content. "And/or" encompasses one or more combinations that can be defined by associated components.

Terms such as first, second, etc. may be used to describe various components, but the components are not limited by the terms. The terms are used only to distinguish one component from another. For example, without departing from the scope of the embodiments, the first component could be referred to as the second component, and similarly, the second component could also be referred to as the first component. The singular expression includes the plural, unless the context clearly indicates otherwise.

Terms such as "below," "lower," "above," and "upper" are used to describe the relationships between components depicted in the drawings. These terms are relative concepts and are described based on the directions indicated in the drawings.

It should be understood that terms such as "include" or "have" are intended to specify the presence of a feature, number, step, operation, component, part or combination thereof described in the specification, but do not preclude the possibility of the presence or addition of one or more other features, numbers, steps, operations, components, parts or combinations thereof.

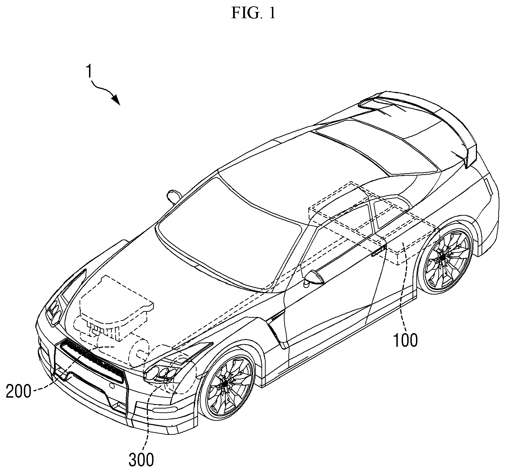

FIG. 1 is a perspective view of a hybrid electric vehicle according to one embodiment.

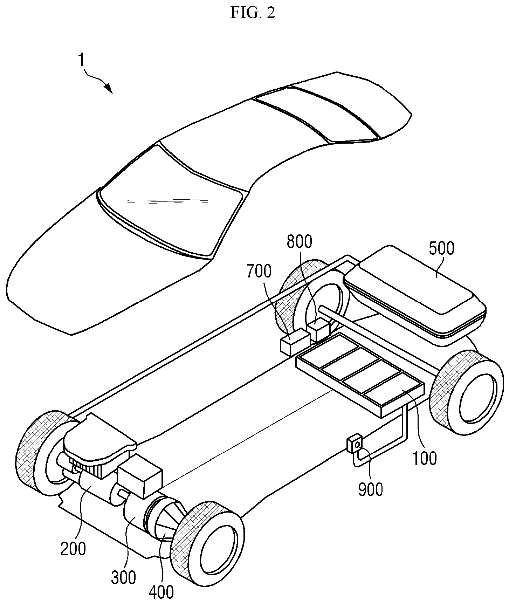

Referring to FIG. 1, the hybrid electric vehicle 1 may include a first battery 100, an engine 200, and a motor 300 connected to the first battery 100. The first battery 100 may supply charged electric energy to the motor 300. The motor 300 may convert the electric energy supplied from the first battery 100 into kinetic energy to provide power to the hybrid electric vehicle 1. The engine 200 is arranged to be spaced apart from the motor 300 and may provide power to the hybrid electric vehicle 1 based on fuel supplied from a fuel tank (see 500 in FIG. 2). That is, the vehicle 1 according to FIG. 1 may be a hybrid electric vehicle driven by the motor 300 and/or the engine 200. In FIG. 1, the engine 200 and the motor 300 are exemplified as providing power only to two wheels (front wheels) located in the front portion FP of the hybrid electric vehicle 1. However, this is not limited thereto, and the engine 200 and the motor 300 may provide power only to two wheels (rear wheels) located in the rear portion RP of the hybrid electric vehicle 1, or may provide power to both the front and rear wheels. In the following, for convenience of explanation, the explanation will be centered on the case where the engine 200 and the motor 300 are located in the front portion FP and provide power to the front wheels.

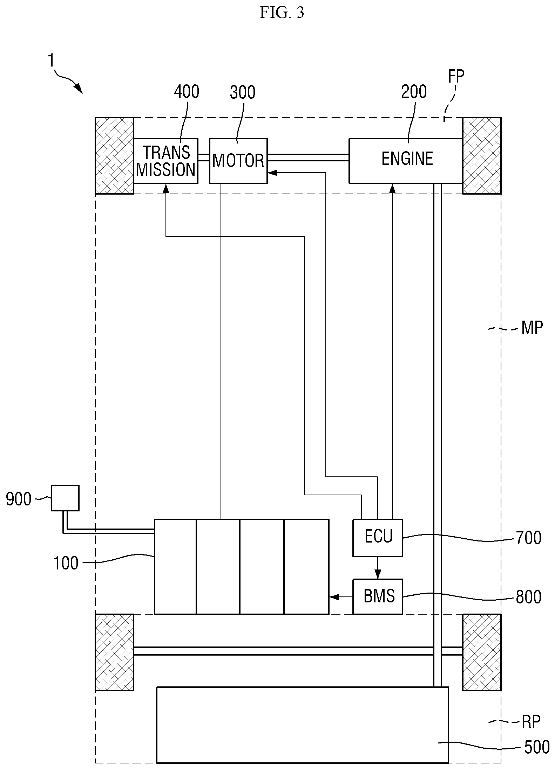

FIG. 2 is an exploded perspective view of the hybrid electric vehicle according to FIG. 1. FIG. 3 is a drawing showing in detail the configuration of the hybrid electric vehicle according to FIG. 2.

Referring to FIGS. 2 and 3, the hybrid electric vehicle 1 may include a first battery 100, an engine (ENGINE, 200), a motor (MOTOR, 300), a transmission (TRANSMISSION, 400), a fuel tank 500, an electric control unit (ECU, 700), a battery management system (BMS, 800), and a plug-in charger 900.

The first battery 100 may be charged via the plug-in charger 900. The first battery 100 may be a plug-in type battery. The plug-in charger 900 may receive electrical energy from an external electrical charging device and supply the electrical energy to the first battery 100 to charge the first battery 100. The first battery 100 may be connected to the motor 300.

The engine 200 may provide power to the hybrid electric vehicle 1 based on the fuel supplied from the fuel tank 500. The motor 300 may provide power to the hybrid electric vehicle 1 by converting electric energy supplied from the first battery 100 into kinetic energy. A clutch may be further arranged between the engine 200 and the motor 300, but is not limited thereto.

The transmission 400 may be positioned between the motor 300 and the wheels, but is not limited thereto. The transmission 400 may shift the power of the motor 300 and/or the power of the engine 200 to move the wheels. A final reduction gear may be further positioned between the transmission 400 and the wheels, but is not limited thereto.

The engine 200, the motor 300, and the transmission 400 may be placed in the front portion FP of the hybrid electric vehicle 1.

The fuel tank 500 may be connected to the engine 200. The fuel tank 500 supplies fuel to the engine 200, and the engine 200 may generate kinetic energy based on the supplied fuel.

The electric control unit 700 may control the engine 200, the motor 300, the transmission 400, and the battery management system 800.

The battery management system 800 may control the first battery 100. The battery management system 800 may control the output and charging of the first battery 100. The battery management system 800 is illustrated as being placed separately from the first battery 100, but is not limited thereto, and may be placed within the first battery 100. For convenience of explanation, the following description will focus on the case where the battery management system 800 is placed separately outside the first battery 100.

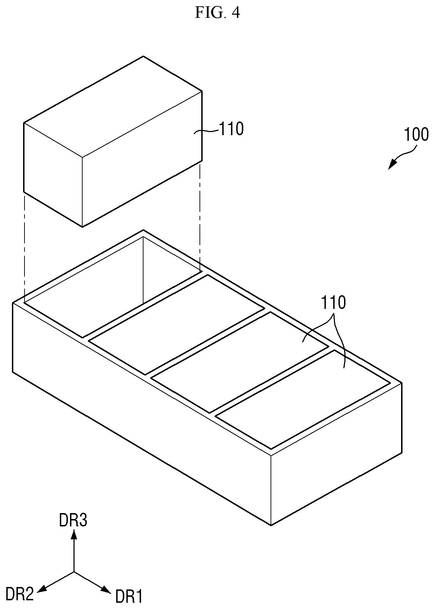

FIG. 4 is a perspective view showing the first battery according to FIG. 3.

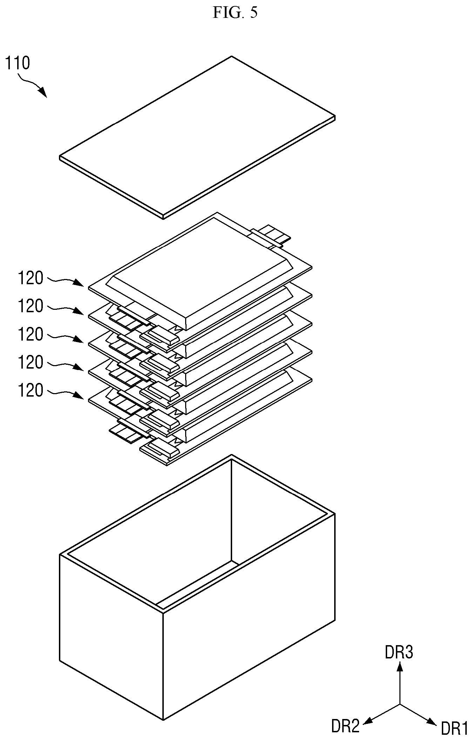

Referring to FIG. 4, the first battery 100 may include a plurality of battery modules 110. However, the first battery 100 may not be limited thereto. That is, the first battery 100 may be manufactured through a cell-to-pack process without going through the manufacturing step of a battery module 110 including a plurality of battery cells 120 (FIG. 5). However, for convenience of explanation, the following description will focus on the first battery 100 including a battery module and battery cells.

Meanwhile, the first battery 100 may further include other components other than the battery cell 120 (FIG. 5), for example known components of the first battery 100, such as a BMS, a bus bar, a pack case, a relay, and a current sensor.

FIG. 5 is a perspective view showing the battery module of the first battery of FIG. 4.

Referring to FIG. 5, the battery module 110 may include battery cells 120. The battery module 110 may include, for example, a cell assembly including a plurality of battery cells 120 electrically connected to each other and a module housing that accommodates the cell assembly.

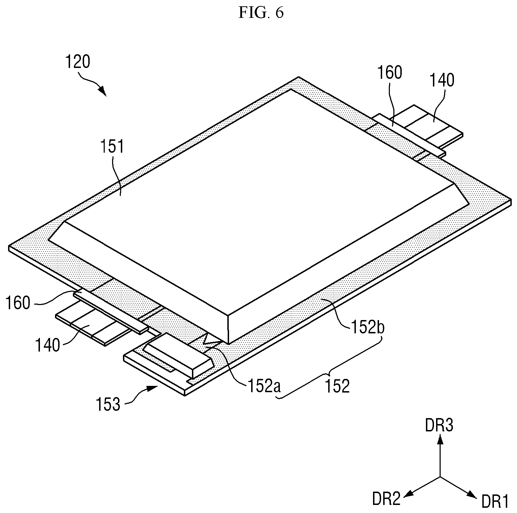

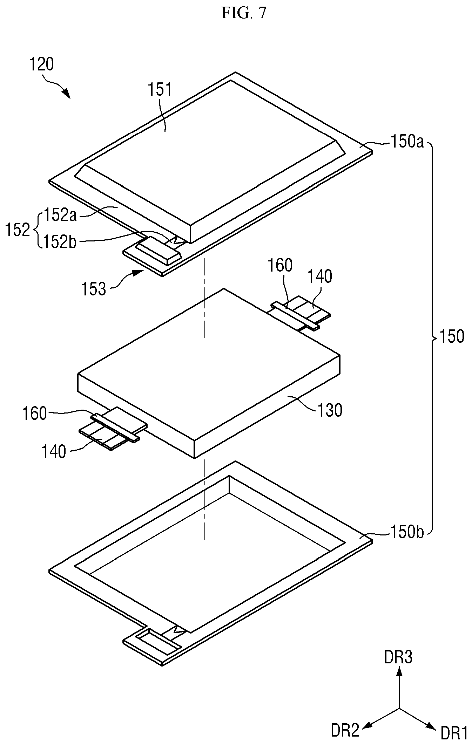

FIG. 6 is a perspective view showing the exterior of the battery cell of FIG. 5. FIG. 7 is an exploded perspective view of the battery cell of FIG. 6.

Referring to FIGS. 6 and 7, the battery cell 120 may include an electrode assembly 130, an electrode lead 140 extending from the electrode assembly 130, and a cell case 150 that accommodates the electrode assembly 130 such that the electrode lead 140 is pulled outward.

The electrode assembly 130 may include, although not illustrated in detail, a first electrode plate having a first electrode tab, a second electrode plate having a second electrode tab, and a separator interposed between the first electrode plate and the second electrode plate. The first electrode plate may be a positive electrode plate coated with a positive electrode active material or a negative electrode plate coated with a negative electrode active material, and the second electrode plate may correspond to an electrode plate having a polarity opposite to that of the first electrode plate. The first electrode tab may be at least a part of an uncoated portion of the first electrode plate on which the positive electrode active material or the negative electrode active material is not coated. The second electrode tab may be at least a part of an uncoated portion of the second electrode plate on which the positive electrode active material or the negative electrode active material is not coated. This uncoated portion may be a portion protruding from the first electrode plate or the second electrode plate of the electrode assembly 130. Specifically, the electrode tab may be formed by gathering portions processed by a notching process in the uncoated portion. Meanwhile, in the present disclosure, the electrode tab is not limited to being at least a part of the uncoated portion. That is, the electrode tab may be provided separately and coupled to the uncoated portion.

The electrode lead 140 may be extended from the electrode assembly 130. The electrode lead 140 may be coupled to the electrode tab by welding or the like. The electrode lead 140 may be provided as a pair and may be provided on one or both sides of the electrode assembly 130.

The cell case 150 may accommodate the electrode assembly 130 so that the electrode lead 140 is drawn outward. The cell case 150 may accommodate an electrolyte inside and accommodate the electrode assembly 130 inside in an impregnated form. The electrode lead 140 may be drawn out from both sides of the cell case 150, or may be drawn out from only one side. The cell case 150 may be a pouch film including a metal material layer, but is not limited thereto. The cell case 150 is formed to accommodate the electrode assembly 130 and prevent the electrolyte from leaking. The cell case 150 may be formed using a 1-cup method in which a pouch including a first case 150a and a second case 150b connected to each other is folded and a portion where the first case 150a and the second case 150b are in contact is sealed. In contrast, the cell case 150 may be formed using a 2-cup method in which the first case 150a and the second case 150b are overlapped and sealed as shown in FIG. 7.

The cell case 150 may include an accommodation portion 151, a sealing portion 152, and a gas discharge pocket 153.

The accommodation portion 151 may accommodate the electrode assembly 130. The accommodation portion 151 may be configured to form an accommodation space that accommodates the electrode assembly 130 approximately near the center of the cell case 150. Referring to FIG. 7, the first cell case 150a and the second cell case 150b may be partially contacted and sealed to form the accommodation portion 151.

The sealing portion 152 may be provided along the edge of the accommodation portion 151. The sealing portion 152 may be formed by sealing the cell case 150 along the edge of the accommodation portion 151 by high temperature compression. In the case of a 1-cup method in which one pouch is folded and sealed, the sealing portion 152 may be formed on three sides excluding the folded portion of the pouch. In the case of a 2-cup method in which the first case 150a and the second case 150b are overlapped and sealed as illustrated in FIG. 7, the sealing portion 152 may be formed on four sides. The sealing portion 152 may have a weak sealing portion 152a configured to have a lower sealing strength than the other region 152b. The other region 152b may be the remainder of the sealing portion 152 excluding the weak sealing portion 152a.

The gas discharge pocket 153 may be provided at a position corresponding to the weak sealing portion 152a. The gas discharge pocket 153 may be configured to be in communication with the accommodation portion 151 when the weak sealing portion 152a is ruptured due to an increase in internal pressure caused by gas generation inside the battery cell 120.

Although not shown in the drawing, the gas discharge pocket 153 and the weak sealing portion 152a may be provided in a desired number at a desired location depending on the location and time at which gas discharge is desired to occur.

The battery cell 120 may include a sealing tape 160. The sealing tape 160 may be interposed between the electrode lead 140 and the inner surface of the cell case 150. The sealing tape 160 may include a heat-sealable film to enhance the sealing performance of the cell case 150 in the area where the electrode lead 140 is drawn out. The sealing tape 160 may include an insulating material to prevent short-circuiting of the electrode lead 140.

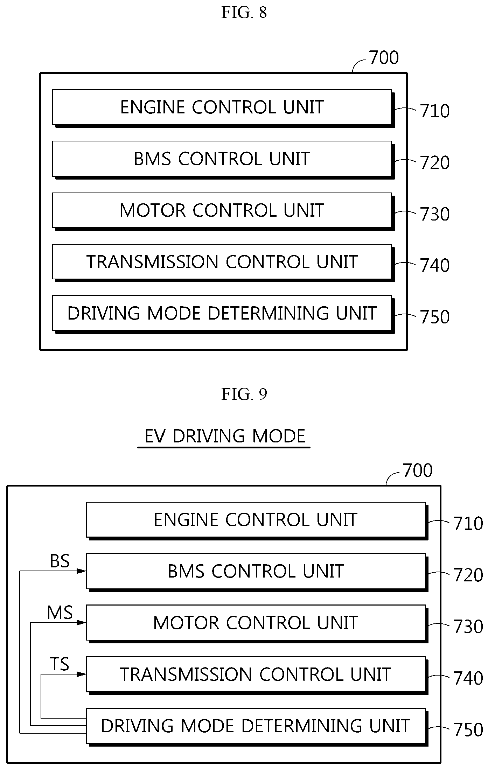

FIG. 8 is a drawing showing the specific configuration of the electric control unit according to FIG. 3.

Referring to FIGS. 3 and 8, the electric control unit 700 may include an engine control unit 710, a BMS control unit 720, a motor control unit 730, a transmission control unit 740, and a driving mode determining unit 750.

The engine control unit 710 may control the engine 200, the BMS control unit 720 may control the battery management system (BMS), the motor control unit 730 may control the motor 300, and the transmission control unit 740 may control the transmission 400.

The driving mode determining unit 750 may determine the driving mode of the hybrid electric vehicle 1. For example, the driving mode determining unit 750 may determine whether the hybrid electric vehicle 1 is in an EV (Electric vehicle) driving mode (or EV mode), an HEV (Hybrid electric vehicle) driving mode (or HEV mode), an ENG (Engine) driving mode (or ENG mode), or an RB (Regenerative braking) driving mode.

The specific details of whether it is an EV driving mode, an HEV driving mode, an ENG driving mode, and an RB driving mode, and the functions and operations of the engine control unit 710, the BMS control unit 720, the motor control unit 730, the transmission control unit 740, and the driving mode determining unit 750 in each driving mode will be described in detail with reference to FIGS. 9 to 16.

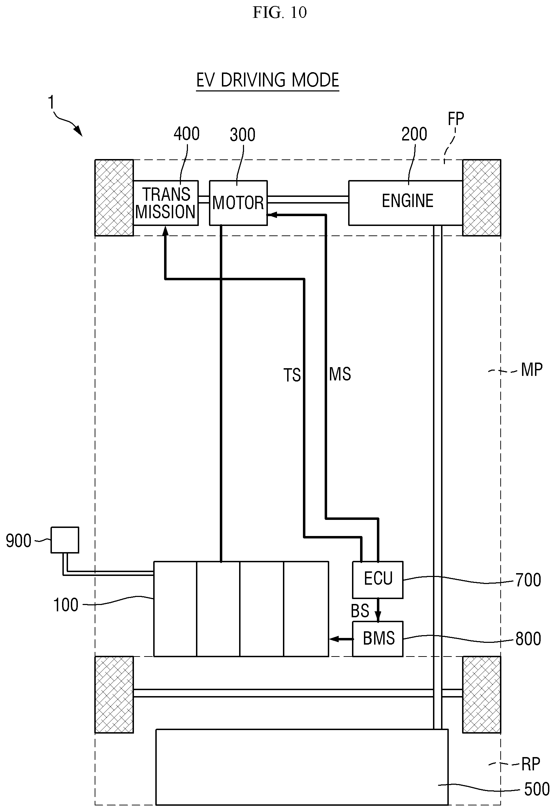

FIG. 9 is a diagram showing the relationships between components of the electric control unit in an EV driving mode. FIG. 10 is a diagram showing the relationships between components of a hybrid electric vehicle in an EV driving mode.

Referring to FIGS. 9 and 10, in the EV driving mode, when the driver steps on the accelerator after starting, the engine clutch is opened and the motor 300 is driven using the power of the first battery 100. The power of the motor 300 moves the wheels through the transmission 400 and the final reduction gear.

Specifically, in the EV driving mode, the driving mode determining unit 750 may determine that the EV driving mode is till the first speed of the hybrid electric vehicle 1 after starting.

The driving mode determining unit 750 may turn on the BMS control unit 720, the motor control unit 730, the transmission control unit 740.

The driving mode determining unit 750 may generate a battery control signal BS and transmit it to the BMS control unit 720, generate a motor control signal MS and transmit it to the motor 300, generate a transmission control signal TS and transmit it to the transmission 400. In FIG. 9, the driving mode determining unit 750 is exemplified as generating and transmitting the control signals BS, MS, TS to the BMS control unit 720, the motor control unit 730, and the transmission control unit 740, respectively, but is not limited thereto. That is, each of the BMS control unit 720, the motor control unit 730, and the transmission control unit 740 may generate the above-described control signals BS, MS, TS, respectively, under the control of the driving mode determining unit 750. For convenience of explanation, the following description focuses on that the driving mode determining unit 750 generates and transmits the control signals BS, MS, TS to the BMS control unit 720, the motor control unit 730, and the transmission control unit 740, respectively.

The motor control unit 730 may transmit the generated motor control signal MS to the motor 300. The motor 300 may operate based on the transmitted motor control signal MS.

The BMS control unit 720 may transmit the generated battery control signal BS to the first battery 100. The first battery 100 may supply power (or electric energy) to the motor 300 based on the battery control signal BS of the BMS control unit 720.

The switch control unit 760 may turn on the switch SW based on the generated switch-on signal (SON). As a result, the first battery 100 and the motor 300 are electrically connected, and power from the first battery 100 may be transmitted to the motor 300.

The transmission control unit 740 may transmit the generated transmission control signal TS to the transmission 400. The transmission 400 may operate based on the transmitted transmission control signal TS.

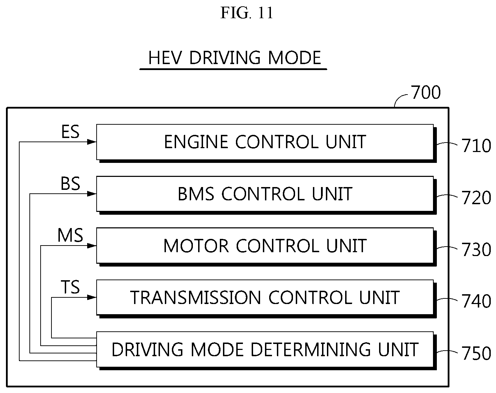

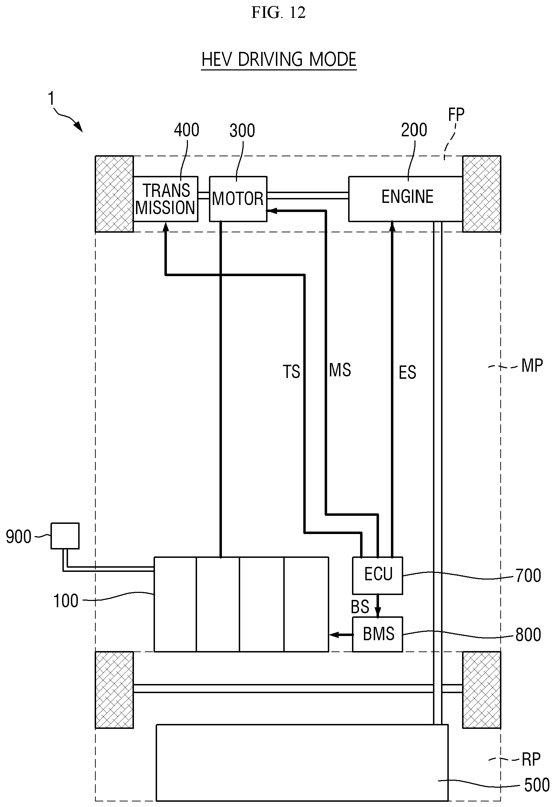

FIG. 11 is a diagram showing the relationships between components of the electric control unit in a HEV driving mode. FIG. 12 is a diagram showing the relationships between components of a hybrid electric vehicle in a HEV driving mode.

Referring to FIGS. 11 and 12, the HEV driving mode may be a driving mode in which the speed of the hybrid electric vehicle 1 is higher than or equal to the first speed. In the HEV driving mode, the engine 200 and the motor 300 drive the hybrid electric vehicle 1 together. In the HEV driving mode, the power of the engine 200 and the motor 300 moves the wheels through the transmission 400 and the final reduction gear.

Specifically, in the HEV driving mode, the driving mode determining unit 750 may determine that the driving mode is HEV driving mode from the first speed or higher.

The driving mode determining unit 750 may turn on the engine control unit 710, the BMS control unit 720, the motor control unit 730, and the transmission control unit 740.

The driving mode determining unit 750 may generate an engine control signal ES and transmit it to the engine control unit 710, generate a battery control signal BS and transmit it to the BMS control unit 720, generate a motor control signal MS and transmit it to the motor 300, and generate a transmission control signal TS and transmit it to the transmission 400. In FIG. 11, the driving mode determining unit 750 is exemplified as generating and transmitting the control signals ES, BS, MS, TS to the engine control unit 710, the BMS control unit 720, the motor control unit 730, and the transmission control unit 740, respectively, but is not limited thereto. That is, each of the engine control unit 710, the BMS control unit 720, the motor control unit 730, and the transmission control unit 740 may generate the above-described control signals MS, BS, MS, TS under the control of the driving mode determining unit 750. For convenience of explanation, the following description will focus on that the driving mode determining unit 750 generates and transmits control signals MS, BS, MS, TS to the engine control unit 710, the BMS control unit 720, the motor control unit 730, and the transmission control unit 740, respectively.

The engine control unit 710 may transmit the generated engine control signal ES to engine 200. The engine 200 may operate based on the transmitted engine control signal ES.

The motor control unit 730 may transmit the generated motor control signal MS to the motor 300. The motor 300 may operate based on the transmitted motor control signal MS.

The BMS control unit 720 may transmit the generated battery control signal BS to the first battery 100. The first battery 100 may supply power (or electric energy) to the motor 300 based on the battery control signal BS of the BMS control unit 720.

The transmission control unit 740 may transmit the generated transmission control signal TS to the transmission 400. The transmission 400 may operate based on the transmitted transmission control signal TS.

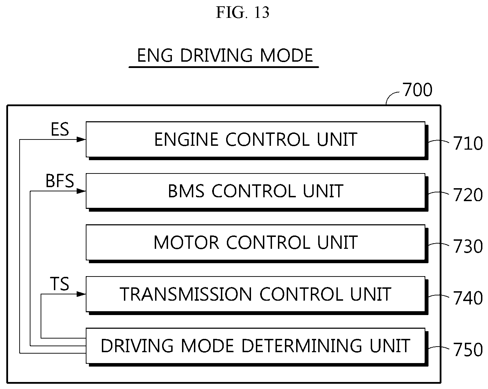

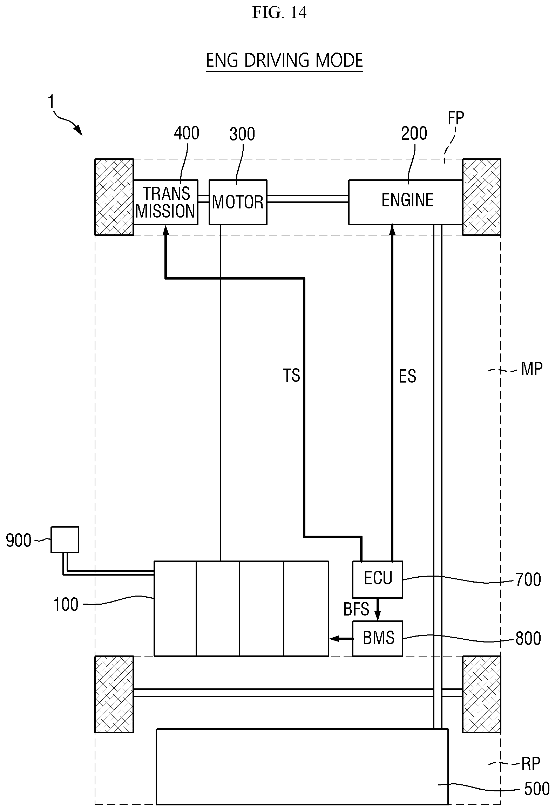

FIG. 13 is a diagram showing the relationships between components of the electric control unit in an ENG driving mode. FIG. 14 is a diagram showing the relationships between components of a hybrid electric vehicle in an ENG driving mode.

Referring to FIGS. 13 and 14, the ENG driving mode may be a driving mode in which the speed of hybrid electric vehicle 1 is higher than or equal to the second speed. In the ENG driving mode, only engine 200 drives the hybrid electric vehicle 1. In the ENG driving mode, the power of the engine 200 moves the wheels through the transmission 400 and the final reduction gear.

Specifically, in the ENG driving mode, the driving mode determining unit 750 may determine that the driving mode is ENG driving mode from the second speed or higher.

The driving mode determining unit 750 may turn on the engine control unit 710 and the transmission control unit 740, and turn off the BMS control unit 720 and the motor control unit 730. In the ENG driving mode, the power supply to the first battery 100 may be cut off by the BMS control unit 720.

The driving mode determining unit 750 may generate an engine control signal ES and transmit it to the engine control unit 710, generate a battery off signal BFS and transmit it to the BMS control unit 720, and generate a transmission control signal TS and transmit it to the transmission 400. In FIG. 13, it is not illustrated that the driving mode determining unit 750 generates a motor off signal for turning off the motor 300 and transmits it to the motor control unit 730, but if the driving mode determining unit 750 does not transmit a motor control signal (see MS of FIG. 11) to the motor control unit 730, the motor 300 may be turned off. However, the present disclosure is not limited thereto, and the driving mode determining unit 750 may separately generate a motor off signal for turning off the motor 300 and transmit it to the motor control unit 730, and the motor 300 may be turned off based on the motor off signal received from the motor control unit 730.

In FIG. 13, it is exemplified that the driving mode determining unit 750 generates and transmits control signals ES, BFS, TS to the engine control unit 710, the BMS control unit 720, and the transmission control unit 740, respectively, but it is not limited thereto. That is, each of the engine control unit 710, the BMS control unit 720, and the transmission control unit 740 may generate the above-described control signals BS, BFS, TS under the control of the driving mode determining unit 750. In the following, for convenience of explanation, the driving mode determining unit 750 will be described with a focus on generating and transmitting control signals ES, BFS, TS to each of the engine control unit 710, the BMS control unit 720, and the transmission control unit 740.

The engine control unit 710 may transmit the generated engine control signal ES to the engine 200. The engine 200 may operate based on the transmitted engine control signal ES.

The BMS control unit 720 may transmit the generated battery off signal BFS to the first battery 100. The first battery 100 may not provide power to the motor 300 based on the battery off signal BFS of the BMS control unit 720.

The transmission control unit 740 may transmit the generated transmission control signal TS to the transmission 400. The transmission 400 may operate based on the transmitted transmission control signal TS.

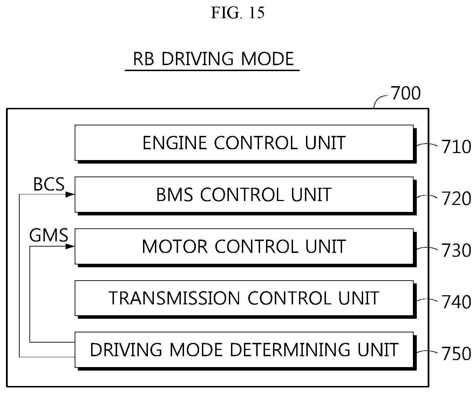

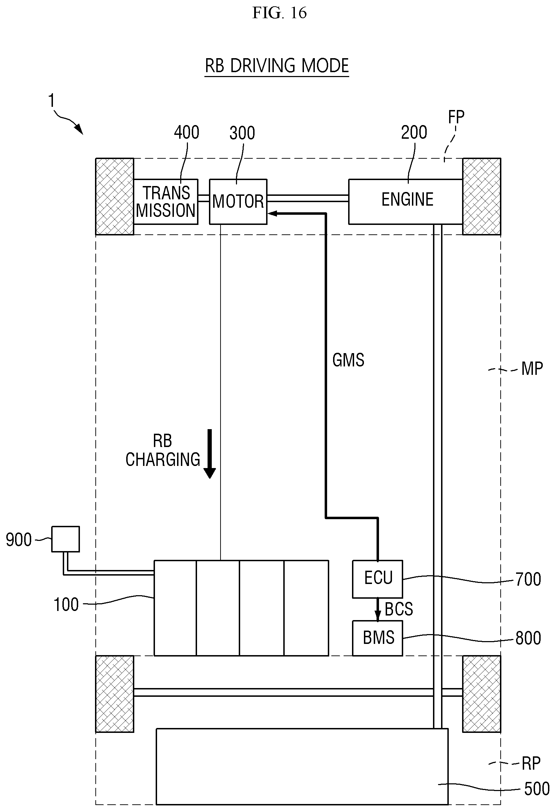

FIG. 15 is a diagram showing the relationships between components of the electric control unit in an RB driving mode. FIG. 16 is a diagram showing the relationship between the components of a hybrid electric vehicle in an RB driving mode.

Referring to FIGS. 15 and 16, the RB driving mode may be a mode that is activated in the braking mode of the hybrid electric vehicle 1.

The RB driving mode may refer to a mode that recovers some of the kinetic energy (or mechanical power) lost in the braking mode and converts it into electrical energy (or electric power).

In the RB driving mode, the motor 300 may operate as a generator instead of converting electrical energy (or electric power) into kinetic energy (or mechanical power). That is, the motor 300 may convert kinetic energy (or mechanical power) into electrical energy (or electric power).

Specifically, in the RB driving mode, the driving mode determining unit 750 may determine that the hybrid electric vehicle 1 is in the RB driving mode when braking.

The driving mode determining unit 750 may turn on the BMS control unit 720, the motor control unit 730, and turn off the transmission control unit 740 and the engine control unit 710.

The driving mode determining unit 750 may generate a battery charging signal BCS and transmit it to the BMS control unit 720, and generate a motor generating signal GMS and transmit it to the motor control unit 730. In FIG. 15, it is not shown that the driving mode determining unit 750 generates a motor off signal for turning off the engine 200 and transmits it to the engine control unit 710, and that the driving mode determining unit 750 generates a transmission off signal for turning off the transmission 400 and transmits it to the transmission control unit 740, but if the driving mode determining unit 750 does not transmit an engine control signal (see ES of FIG. 13) and a transmission control signal (see TS of FIG. 13) to the engine control unit 710 and the transmission control unit 740, respectively, the engine 200 and the transmission 400 may be turned off. However, without being limited thereto, the driving mode determining unit 750 may separately generate an engine off signal and a transmission off signal to turn off the engine 200 and the transmission 400 and transmits them to the engine control unit 710 and the transmission control unit 740, respectively, and the engine 200 and the transmission 400 may be turned off based on the engine off signal and the transmission off signal received from the engine control unit 710 and the transmission control unit 740, respectively.

In FIG. 16, it is exemplified that the driving mode determining unit 750 generates and transmits the control signals BCS, GMS to the BMS control unit 720 and the motor control unit 730, respectively, but it is not limited thereto. That is, each of the BMS control unit 720 and the motor control unit 730 may generate the above-described control signals BCS, GMS, respectively, under the control of the driving mode determining unit 750. In the following, for the convenience of explanation, the explanation will be centered on the fact that the driving mode determining unit 750 generates and transmits the control signals BCS, GMS to the BMS control unit 720 and the motor control unit 730, respectively.

The BMS control unit 720 may transmit the generated battery charging signal BCS to the first battery 100. The first battery 100 may charge (RB CHARGING) the electric energy (or electric power) generated from the motor 300 based on the transmitted battery charging signal BCS.

The motor control unit 730 may transmit the generated motor generating signal GMS to the motor 300. The motor 300 may convert the motor 300 into a generator and operate based on the motor generating signal GMS of the motor control unit 730. The motor 300 may recover some of the kinetic energy (or mechanical power) lost in the RB braking mode and convert it into electric energy (or electric power). The motor 300 may transmit the converted electric energy (or electric power) to the first battery 100.

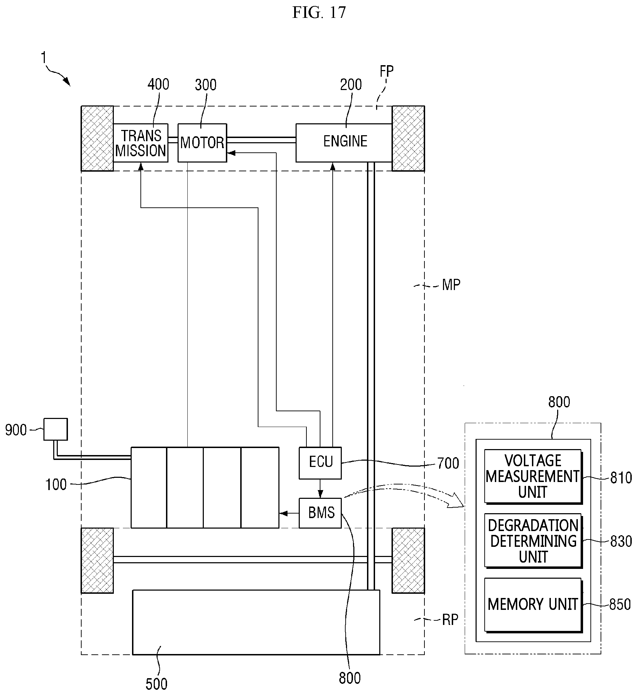

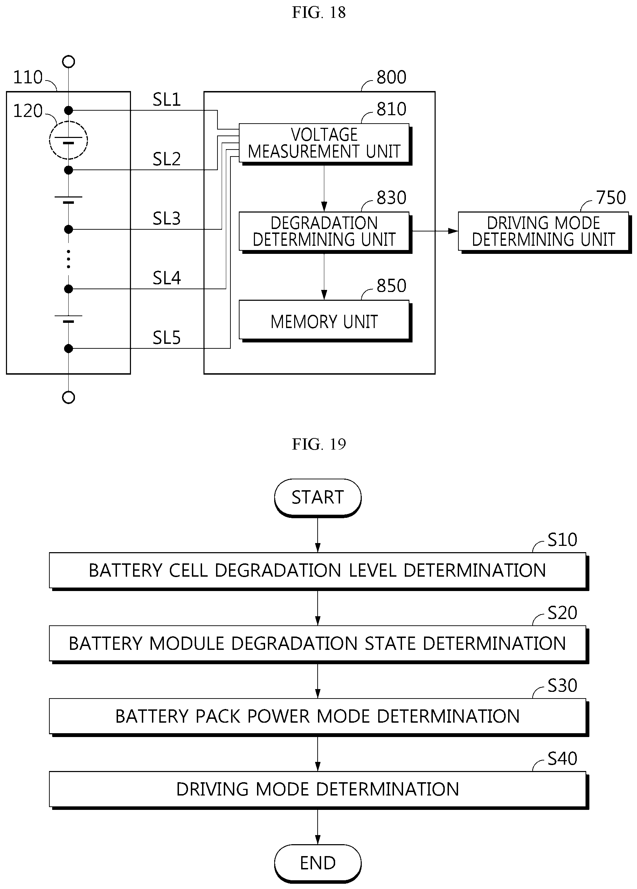

FIG. 17 is a detailed diagram illustrating in detail the configuration of a hybrid electric vehicle according to one embodiment. FIG. 18 is a diagram illustrating the measurement of the open circuit voltage of a battery cell using the battery management system according to FIG. 17. FIG. 19 is a flowchart illustrating a driving mode control method based on the degradation state of the first battery of a hybrid electric vehicle according to one embodiment.

Referring to FIGS. 17 to 19, the battery management system 800 of a hybrid electric vehicle 1 according to one embodiment may include a voltage measurement unit 810, a degradation determining unit 830, and a memory unit 850.

The battery management system 800 may include a voltage measurement unit 810, a degradation determining unit 830, and a memory unit 850.

The voltage measurement unit 810 may measure the voltage when the battery cell 120 included in the battery module 110 is discharged. That is, the voltage measurement unit 810 may be configured to measure the voltage of each battery cell 120 included in the battery module 11. In FIG. 18, for convenience of explanation, the battery management system 800 is illustrated as measuring the voltage of the battery cells 120 included in one battery module 11, but the battery management system 800 may also simultaneously measure the voltages of the battery cells 120 included in a plurality of battery modules 11.

For example, as illustrated in FIG. 18, the voltage measurement unit 810 of the battery management system 800 may measure the voltages of a plurality of battery cells 120 included in the battery module 11, respectively. Specifically, the voltage measurement unit 810 may measure the voltage of the first battery cell 120 through the first sensing line SL1 and the second sensing line SL2, and may measure the voltage of the second battery cell 120 through the second sensing line SL2 and the third sensing line SL3. In addition, the voltage measurement unit 810 may measure the voltage of the third battery cell 120 through the third sensing line SL3 and the fourth sensing line (not shown), and may measure the voltage of the n-th battery cell 120 through the n-1-th sensing line (SLn-1) and the n-th sensing line (SLn).

The voltage measurement unit 810 may measure the open circuit voltage (OCV) of the battery cell 120. That is, the voltage measurement unit 810 may measure both the voltage and the open circuit voltage of the battery cell 120. In particular, the voltage measurement unit 810 may measure the open circuit voltage of each battery cell 120 when the measured voltage reaches a preset voltage and after a certain time has elapsed. For example, the voltage measurement unit 810 may measure the open circuit voltage of each battery cell 120 when the measured voltage reaches a preset voltage and after a certain time has elapsed so that each battery cell 120 reaches an idle state.

Here, the preset voltage is a voltage value that is commonly applied to all battery cells 120 and is preset to unify the OCV measurement time point. For example, the preset voltage may be set to a discharge end voltage or charge end voltage of a plurality of battery cells 120. As another example, the preset voltage may be preset to a specific voltage (e.g., 2.8 [V] to 4.2 [V]) included in the voltage range of the battery cells 120.

For example, it is assumed that the preset voltage is set to V1 [V] for each of battery cells 120. At this time, the voltage measurement unit 810 may measure the open circuit voltage of the first battery cell 120 when the voltage of the first battery cell 120 reaches V1. Similarly, the voltage measurement unit 810 may measure the open circuit voltage of the second battery cell 120, the third battery cell 120, the fourth battery cell 120, or the nth battery cell 120 when the voltage of the second battery cell 120, the third battery cell 120, the fourth battery cell 120, or the nth battery cell 120 reaches V1.

The degradation determining unit 830 may classify the degradation level for each battery cell 120 based on the voltage magnitude and change rate measured during the charging and discharging process. A plurality of battery cells 120 may be classified into one of decelerated degradation, linear degradation, and accelerated degradation for each cell by the degradation determining unit 830.

The battery module 110 may be determined to be in an abnormal degradation state, a normal state, or a complete degradation state by the degradation determining unit 830, depending on the number of battery cells 120 classified as accelerated degradation among the plurality of battery cells 120 included in each battery module. Alternatively, the battery module 110 may be determined to be in an abnormal degradation state, a normal state, or a complete degradation state by the degradation determining unit 830, depending on the ratio of battery cells 120 classified as accelerated degradation among the plurality of battery cells 120 included in each battery module.

The memory unit 850 stores data regarding the preset voltage, and when the degradation determining unit 830 determines the degradation level of the battery cell 120, the data regarding the preset voltage may be transmitted to the degradation determining unit 830.

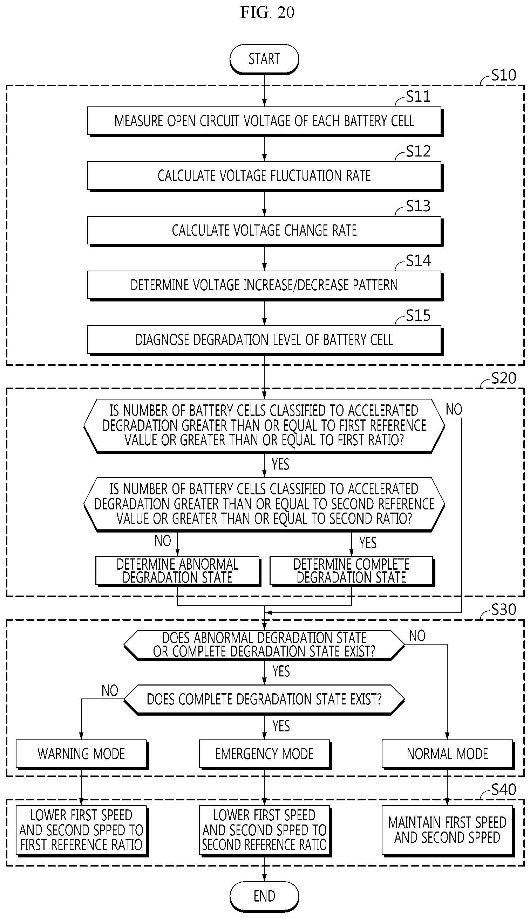

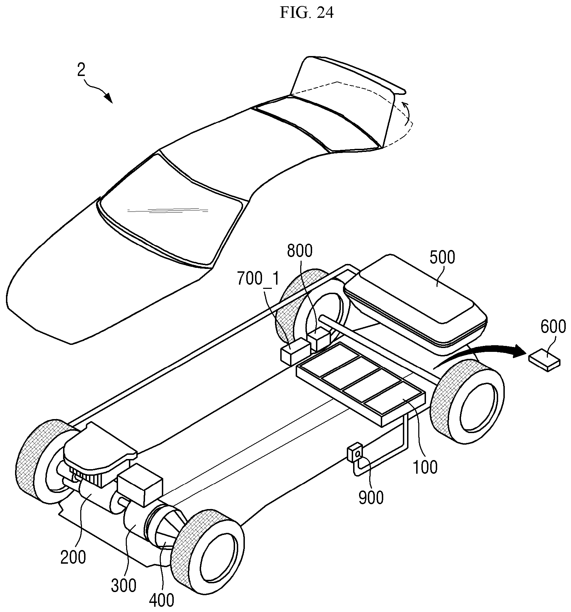

Hereinafter, a driving mode determination method based on the degradation state of the first battery 100 of a hybrid electric vehicle 1 using the battery management system 800 of the hybrid electric vehicle 1 will be described in detail with reference to FIGS. 17 to 20. It is obvious that the contents mentioned to describe the driving mode determination method based on the degradation state of the first battery 100 of the hybrid electric vehicle 1 with reference to FIGS. 20 to 23 may also be applied to the battery management system 800 of the hybrid electric vehicle 2 according to FIGS. 24 to 37, which will be described later.

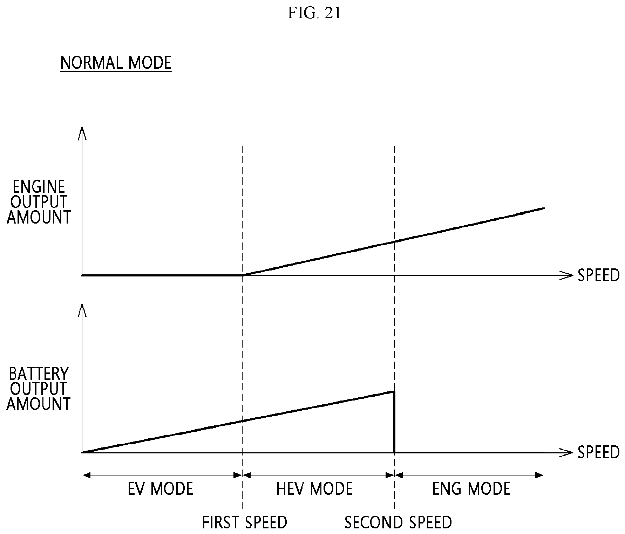

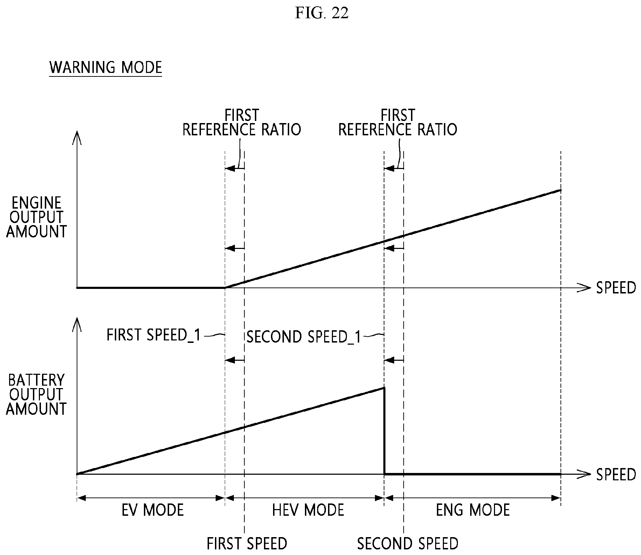

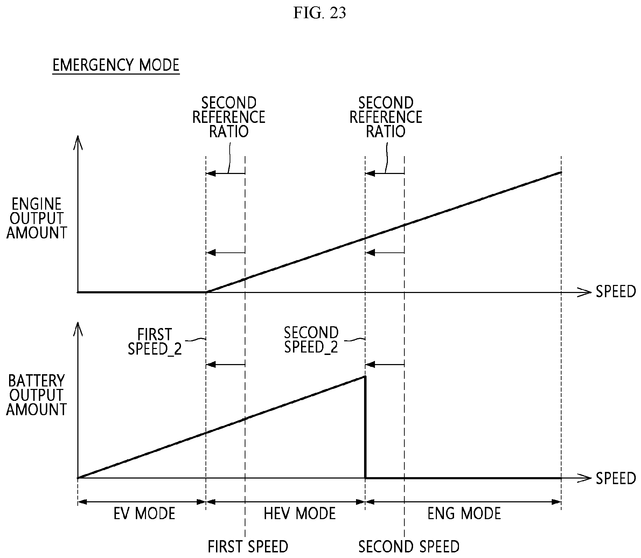

FIG. 20 is a flowchart illustrating more detailed steps of FIG. 19. FIG. 21 is a graph illustrating driving mode control in a normal mode of FIG. 20. FIG. 22 is a graph illustrating driving mode control in a warning mode of FIG. 20. FIG. 23 is a graph illustrating driving mode control in an emergency mode of FIG. 20.

Referring to FIGS. 17 to 23, the method for determining a driving mode based on the degradation state of the first battery 100 of the hybrid electric vehicle 1 using the battery management system 800 may include a battery cell degradation level determining step (S10), a battery module degradation state determining step (S20), a battery power mode determining step (S30), and a driving mode determining step S40.

In the battery cell degradation level determining step (S10), the battery management system 800 may diagnose the degradation level of a plurality of battery cells 120.

Specifically, the battery management system 800 may classify the degradation level of each of the battery cells 120. Specifically, the battery management system 800 may measure the voltage of each of the battery cells 120 when charging the battery and classify the degradation level of each of the battery cells 120 as one of decelerated degradation, linear degradation, and accelerated degradation.

Here, the normal degradation, the linear degradation, and the accelerated degradation refer to the degradation states of the battery cell 120 determined in terms of degradation speed. The normal degradation refers to a state in which the battery cell 120 does not experience performance degradation compared to the BOL (Beginning of Life) state. The linear degradation refers to a state in which the degradation of the battery cell 120 is not accelerated but progresses linearly. The accelerated degradation refers to a state in which the degradation of the battery cell 120 is gradually accelerated.

The voltage measurement unit 810 may measure the open circuit voltage of each of the plurality of battery cells 120 (S11). In addition, the voltage measurement unit 810 may transmit the measured open circuit voltage of the battery cells 120 to the degradation determining unit 830. Here, the open circuit voltage transmitted to the degradation determining unit 830 may be used as a factor for calculating the voltage fluctuation rate used to classify the degradation level of the battery cells 120.

Afterwards, the degradation determining unit 830 receives the open circuit voltage of each of the plurality of battery cells 120 transmitted from the voltage measurement unit 810, and may calculate the voltage fluctuation rate of each of the battery cells 120 according to the received open circuit voltage (S12). At this time, the degradation determining unit 830 may receive the open circuit voltage for each cycle, and calculate the voltage fluctuation rate of each of the battery cells 120 according to the received open circuit voltage.

Specifically, the degradation determining unit 830 may calculate the voltage fluctuation rate as the difference or ratio between the preset reference voltage and the open circuit voltage transmitted from the voltage measurement unit 810.

Specifically, the reference voltage may be the OCV of the battery cell 120 in the BOL state or a voltage value set theoretically/experimentally.

For example, it is assumed that the voltage measurement unit 810 measures the OCV of the battery cell 120 when the voltage of the battery cell 120 reaches the charge end voltage (or discharge end voltage). The reference voltage is the OCV of the battery cell 120 measured when the voltage of the battery cell 120 in the BOL state reaches the charge end voltage (or discharge end voltage).

As another example, the reference voltage may be preset to the OCV of a base cell preset to correspond to the battery cell 120 or a reference cell determined theoretically/experimentally through simulation, etc., rather than the battery cell 120 in the BOL state.

Assume that the voltage of the battery cell 120 of the kth battery is Vₖ [V] and the reference voltage is V_{ref} [V]. The degradation determining unit 830 may calculate the voltage fluctuation rate of the kth battery cell 120 by calculating the formula "Vₖ - V_{ref}" or "Vₖ ÷ V_{ref}".

When the degradation determining unit 830 calculates a voltage fluctuation rate, it may calculate the voltage change rate based on the calculated voltage fluctuation rate and the pre-stored voltage fluctuation rate data. Here, the voltage fluctuation rate data may be reference data for comparison with the calculated voltage fluctuation rate and may be data in which the calculated voltage fluctuation rate value is stored. Specifically, the pre-stored voltage fluctuation rate data may be data in which the voltage fluctuation rate calculated in the past by the degradation determining unit 830 is stored for each cycle. For example, when the current cycle is the sth cycle, the voltage fluctuation rate of the battery cell 120 from the first cycle to the s-1th cycle may be stored in the voltage fluctuation rate data.

The degradation determining unit 830 may calculate a voltage change rate for each preset cycle section based on the pre-stored voltage fluctuation rate data (S13). Here, the voltage change rate may include an average change rate or an instantaneous change rate of the voltage fluctuation rates.

Specifically, the degradation determining unit 830 may calculate a voltage change rate for the voltage fluctuation rate included in the cycle section selected based on the current cycle. Here, the voltage change rate may be an average change rate of the plurality of voltage fluctuation rates included in the selected cycle section or an instantaneous change rate of the voltage fluctuation rate of the current cycle in the predetermined cycle section. In other words, the voltage change rate is an indicator indicating an increase or decrease in the voltage fluctuation rate in the predetermined cycle section. Preferably, the voltage change rate may be calculated as 0, a positive number, or a negative number. For example, the degradation determining unit 830 assumes that the last 10 cycles including the current cycle are selected. The degradation determining unit 830 may calculate a voltage change rate of the voltage fluctuation rates for the 10 cycles.

The degradation determining unit 830 may determine the voltage increase/decrease pattern of the battery cell 120 based on the calculated voltage change rate (S14). The voltage increase/decrease pattern may include various patterns, such as a voltage increase pattern, a voltage decrease pattern, and a voltage constant pattern.

The degradation determining unit 830 may determine the degradation level as one of accelerated degradation, linear degradation, and decelerated degradation based on the voltage increase/decrease pattern of the battery cell 120 (S15).

Specifically, the degradation determining unit 830 may determine the voltage increase/decrease pattern as a voltage increase pattern when the voltage change rate is a positive change rate. The degradation determining unit 830 may determine the voltage increase/decrease pattern as a voltage constant pattern when the voltage change rate is 0. The degradation determining unit 830 may determine the voltage increase/decrease pattern as a voltage decrease pattern when the voltage change rate is a negative change rate.

Meanwhile, the degradation determining unit 830 may determine the degradation level of the battery cell 120 according to the voltage increase/decrease pattern. Specifically, the degradation determining unit 830 may determine the degradation level of the battery cell 120 as normal degradation when the voltage change rate is a positive change rate or 0, that is, when the voltage increase/decrease pattern is determined as a voltage increase pattern or a voltage constant pattern. This means that the open circuit voltage of the battery cell 120 is not degraded, and may mean that performance degradation of the first battery 100 is not occurring.

The degradation determining unit 830 may determine the degradation level of the battery cell 120 as either linear degradation or accelerated degradation if the voltage change rate is a negative change rate, that is, if the voltage increase/decrease pattern is determined as a voltage decrease pattern. At this time, the degradation determining unit 830 may determine accelerated degradation if the negative change rate has a negative change rate greater than the size of the preset change rate, and may determine linear degradation if the negative change rate has a negative change rate less than or equal to the size of the preset change rate. This may mean that the open circuit voltage of the battery cell 120 is gradually decreasing, and may mean that performance degradation of the first battery 100 is occurring. In particular, in the case of accelerated degradation, it may mean that performance degradation of the first battery 100 is occurring at a faster speed than the natural performance degradation of the first battery 100.

Here, in order to classify linear degradation and accelerated degradation, the degradation determining unit 830 may be configured to determine the degradation level of each battery cell 120 based on a voltage change rate and a preset reference change rate. That is, the preset reference voltage change rate is a reference change rate set to determine the degradation level as either accelerated degradation or linear degradation when the voltage increase/decrease pattern of the battery cell 120 is determined as a voltage decrease pattern.

In the battery module degradation state determining step (S20), the battery management system 800 may diagnose the degradation state of the battery module 11.

In the battery module degradation state determining step (S20), the degradation determining unit 830 may determine the degradation state of the battery module 110 based on the number or ratio of battery cells 120 whose degradation level is determined to be accelerated degradation among the plurality of battery cells 120 provided in the battery module 11.

Specifically, if the number of battery cells 120 among the plurality of battery cells 120 provided in the battery module 11, of which the degradation level is determined to be accelerated degradation, is equal to or greater than the first reference value or the ratio is equal to or greater than the first rate, the degradation determining unit 830 may determine the degradation state of the battery module 110 as an abnormal degradation state or a complete degradation state. Conversely, if the number of battery cells 120 among the plurality of battery cells 120, of which the degradation level is determined to be accelerated degradation, is less than the first reference value and the ratio is less than the first rate, the degradation determining unit 830 may determine the degradation state of the battery module 110 as a normal degradation state.

More specifically, when the number of battery cells 120 among the plurality of battery cells 120 provided in the battery module 11, of which the degradation level is determined to be accelerated degradation, is equal to or greater than the second reference value (set to be greater than the first reference value) or the ratio is equal to or greater than the second rate (set to be greater than the first rate), the degradation determining unit 830 may determine the degradation state of the battery module 110 as a complete degradation state. Conversely, when the number of battery cells 120 among the plurality of battery cells 120 provided in the battery module 11, of which the degradation level is determined to be accelerated degradation, is less than the second reference value and the ratio is less than the second rate, the degradation determining unit 830 may determine the degradation state of the battery module 110 as an abnormal degradation state.

That is, if 1) the number of battery cells 120 whose degradation level is determined to be accelerated degradation among the plurality of battery cells 120 provided in the battery module 110 is less than the first reference value and 2) the ratio is less than the first rate, the degradation determining unit 830 may determine the degradation state of the battery module 110 as a normal degradation state. In addition, if 1) the number of battery cells 120 whose degradation level is determined to be accelerated degradation among the plurality of battery cells 120 provided in the battery module 110 is greater than or equal to the first reference value and less than the second reference value and 2) the ratio is greater than or equal to the first rate and less than the second rate, the degradation determining unit 830 may determine the degradation state of the battery module 110 as an abnormal degradation state. And, if 1) the number of battery cells 120 among the plurality of battery cells 120 provided in the battery module 11, of which the degradation level is determined to be accelerated degradation, is equal to or greater than the second reference value or 2) the ratio is equal to or greater than the second rate, the degradation determining unit 830 may determine the degradation state of the battery module 110 as a complete degradation state.

For example, assume that 10 battery cells 120 are provided in each battery module 11, and that the first reference value is 4 or the first rate is preset to 40%, and that the second reference value is 7 or the second rate is preset to 70%. In this case, if the number of battery cells 120 whose degradation level is determined to be accelerated degradation is less than 4 among the 10 battery cells 120 provided in each of the plurality of battery modules 11, the degradation determining unit 830 may determine the degradation state of the corresponding battery module 110 as a normal degradation state. If the number of battery cells 120 whose degradation level is determined to be accelerated degradation is 4 or more and less than 7 among the 10 battery cells 120 provided in each of the plurality of battery modules 11, the degradation determining unit 830 may determine the degradation state of the corresponding battery module 110 as an abnormal degradation state. In addition, if the number of battery cells 120 whose degradation level is determined to be accelerated degradation is 7 or more among the 10 battery cells 120 provided in each of the plurality of battery modules 11, the degradation determining unit 830 may determine that the corresponding battery module 110 is in a complete degradation state.

Meanwhile, according to the embodiment, the degradation determining unit 830 may change and set the first reference value, the second reference value, the first rate, and the second rate based on the total driving distance of the vehicle.

Specifically, the degradation determining unit 830 may reduce and set the first reference value, the second reference value, the first rate, and the second rate based on the total driving distance of the hybrid electric vehicle 1 after the corresponding first battery 100 is installed. At this time, information on the total driving distance of the hybrid electric vehicle 1 may be stored in the memory of the electric control unit 700 or the memory unit 850 of the battery management system 800. As the hybrid electric vehicle 1 is driven, the total driving distance of the hybrid electric vehicle 1 gradually increases, and accordingly, the standard for determining the degradation state of the battery module 110 may be lowered. With this configuration, the degradation speed of the first battery 100 may be reduced, and the first battery 100 may be protected.

That is, the degradation determining unit 830 may more strictly determine the degradation state of the battery module 110 by reducing the size of the reference value used to determine the degradation state of the battery module 110 as the battery pack 10 is used more (as the total driving distance of the vehicle increases).

For example, as the magnitudes of the reference values such as the first value, the first rate, the second value, and the second rate decrease, the degradation state of the battery module 110 is more likely to be determined as a complete degradation state rather than an abnormal degradation state. Therefore, the degradation state of the battery module 110 may be determined more strictly.

In the battery power mode determining step (S30), the battery management system 800 may determine the power mode of the first battery 100.

Specifically, in the battery power mode setting step (S30), the degradation determining unit 830 may determine the power mode of the first battery 100 as a normal mode, a warning mode, or an emergency mode based on the degradation state of each battery module 11.

For example, if the degradation states of all of the plurality of battery modules 11 are normal degradation states, the degradation determining unit 830 may set the power mode of the first battery 100 to a normal mode. That is, if there is no battery module 110 whose degradation state is an abnormal degradation state or a complete degradation state among the plurality of battery modules 11, the degradation determining unit 830 may set the power mode of the first battery 100 to a normal mode. If there is at least one battery module 110 whose degradation state is an abnormal degradation state among the plurality of battery modules 11 and the remaining degradation states are normal degradation states, the degradation determining unit 830 may set the power mode of the first battery 100 to a warning mode. If there is at least one battery module 110 whose degradation state is a complete degradation state among the plurality of battery modules 11, the degradation determining unit 830 may set the power mode of the first battery 100 to an emergency mode.

As another example, if the ratio of battery modules 11 whose degradation state is an abnormal degradation state or a complete degradation state among the plurality of battery modules 11 is less than a preset third ratio, the degradation determining unit 830 may set the power mode of the first battery 100 to a normal mode. In addition, if the ratio of battery modules 11 whose degradation state is an abnormal degradation state or a complete degradation state among the plurality of battery modules 11 is greater than or equal to the third ratio and less than a preset fourth ratio, the degradation determining unit 830 may set the power mode of the first battery 100 to a warning mode. Here, the fourth ratio has a ratio value greater than the third ratio. In addition, if the ratio of battery modules 11 whose degradation state is an abnormal degradation state or a complete degradation state among the plurality of battery modules 11 is greater than or equal to the fourth ratio, the degradation determining unit 830 may set the power mode of the first battery 100 to an emergency mode. Meanwhile, the degradation determining unit 830 may adjust the sizes of the third ratio and the fourth ratio. For example, the degradation determining unit 830 may, but is not limited to, reduce the size of the third ratio and the fourth ratio as the number of charging cycles increases.

In the driving mode determining step (S40), the driving mode determining unit 750 may determine the driving mode of the hybrid electric vehicle 1 according to the power mode of the first battery 100.

The driving mode determining unit 750 may receive information on the degradation state of the battery module 110 and the power mode of the first battery 100 from the degradation determining unit 830. Furthermore, the driving mode determining unit 750 may determine the driving mode of the hybrid electric vehicle 1 according to the power mode of the first battery 100.

The driving mode determining unit 750 may control the driving mode to maintain the first speed and the second speed when the power mode of the first battery 100 is the normal mode. In addition, the driving mode determining unit 750 may control the driving mode by lowering the first speed and the second speed to the first reference ratio, respectively, when the power mode of the first battery 100 is the warning mode. In addition, the driving mode determining unit 750 may control the driving mode by lowering the first speed and the second speed to the second reference ratio, respectively, which is greater than the first reference ratio, when the power mode of the first battery 100 is the emergency mode.

As described above with reference to FIGS. 9 and 10, in the EV driving mode, the driving mode determining unit 750 may determine that the driving mode up to the first speed of the hybrid electric vehicle 1 after starting is the EV driving mode, the driving mode determining unit 750 may determine that the driving mode from the first speed or higher is the HEV driving mode, and in the ENG driving mode, the driving mode determining unit 750 may determine that the driving mode from the second speed or higher is the ENG driving mode.

Hereinafter, reference will be made to FIGS. 21 to 23. FIGS. 21 to 23 illustrate the motor output amount and the engine output amount according to the speed of a hybrid electric vehicle in a normal mode, a warning mode, and an emergency mode, respectively. FIGS. 21 to 23 classify the EV mode, the HEV mode, and the ENG mode, which are distinguished according to the first speed and the second speed, respectively.

Referring to FIGS. 20 and 21, when the power mode of the first battery 100 is a normal mode, the first speed and the second speed may be maintained without changing. After starting the hybrid electric vehicle 1 in the EV mode, the motor output amount increases by the first battery 100 up to the first speed, and the engine output amount is maintained at 0. After the first speed, it transitions to the HEV mode, and the motor output amount and the engine output amount simultaneously increase up to the second speed. After the second speed, it transitions to the ENG mode, and the motor output amount decreases to 0, and the engine output amount increases.

Referring to FIGS. 20 and 22, when the power mode of the first battery 100 is the warning mode, the first speed and the second speed are variable. Specifically, the first speed and the second speed may each be lowered to the first reference ratio. The first speed and the second speed may each be lowered to the first reference ratio and set to the first speed_1 and the second speed_1. After starting the hybrid electric vehicle 1 in the EV mode, the motor output amount increases by the first battery 100 to the first speed_1, and the engine output amount is maintained at 0. After the first speed_1, it transitions to the HEV mode, and the motor output amount and the engine output amount simultaneously increase to the second speed_1. After the second speed_1, it transitions to the ENG mode, and the motor output amount decreases to 0, and the engine output amount increases.

Referring to FIGS. 20 and 23, when the power mode of the first battery 100 is the emergency mode, the first speed and the second speed are variable. Specifically, the first speed and the second speed may each be lowered to the second reference ratio. The first speed and the second speed may each be lowered to the second reference ratio and set to the first speed_2 and the second speed_2. The second reference ratio may be larger than the first reference ratio. Therefore, the first speed_2 and the second speed_2 may each be smaller than the first speed_1 and the second speed_1. After starting the hybrid electric vehicle 1 in the EV mode, the motor output amount increases to the first speed_2 by the first battery 100, and the engine output amount is maintained at 0. After the first speed_2, it transitions to the HEV mode, and the motor output amount and the engine output amount simultaneously increase to the second speed_2. After the second speed_2, it transitions to the ENG mode, and the motor output amount decreases to 0, and the engine output amount increases.

According to the hybrid electric vehicle 1 according to the present embodiment, the first speed and the second speed, which serve as the standards for the EV driving mode, the HEV driving mode, and the ENG driving mode, may be varied depending on the power mode of the first battery 100. That is, the worse the degradation state of the plurality of battery modules 11 included in the first battery 100, the more the driving mode of the hybrid electric vehicle 1 may be determined to reduce the use of the first battery 100. This has the advantage that the degradation of the first battery 100 may be delayed.

Hereinafter, a hybrid electric vehicle according to another embodiment will be described. For configurations identical or similar to the configuration described above in relation to FIGS. 1 to 23, duplicate descriptions or detailed descriptions will be omitted.

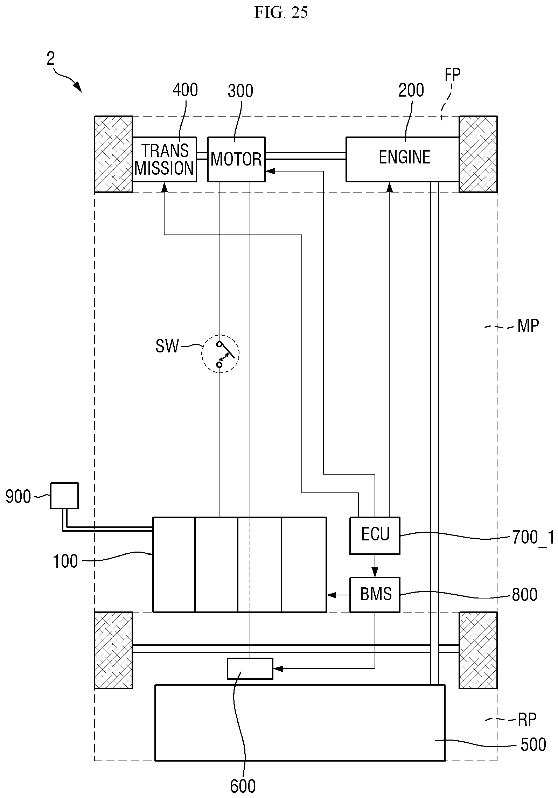

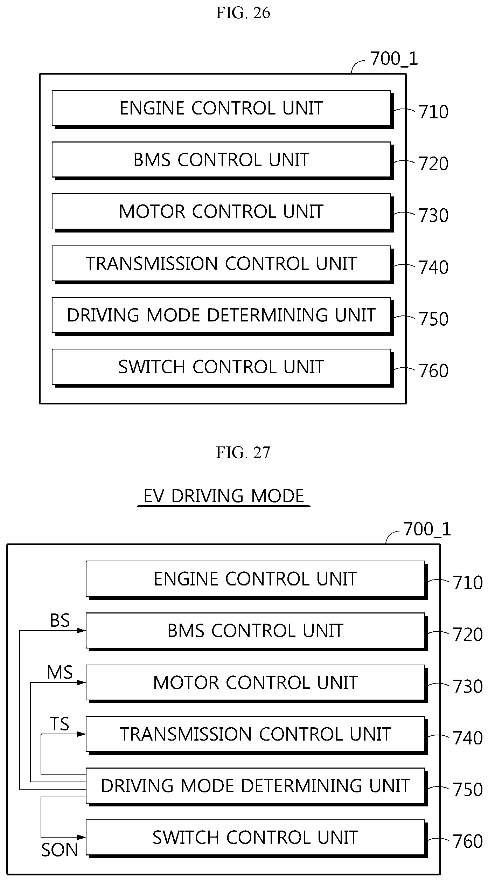

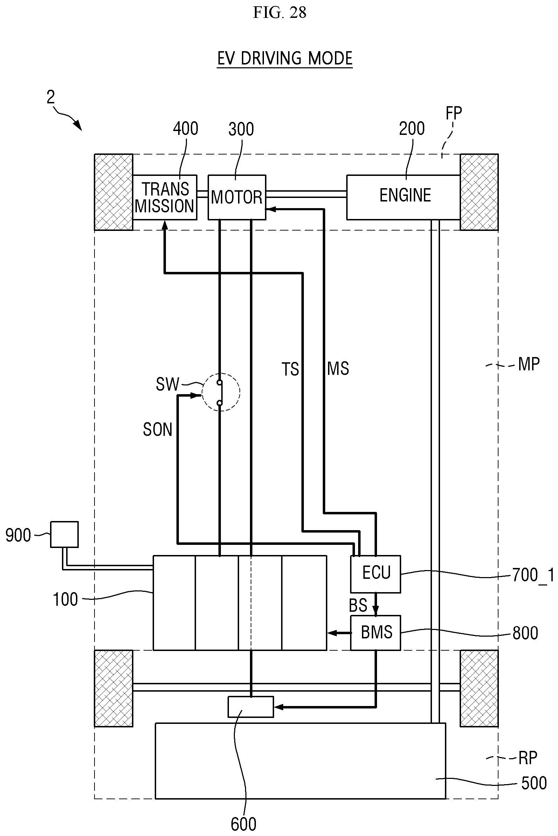

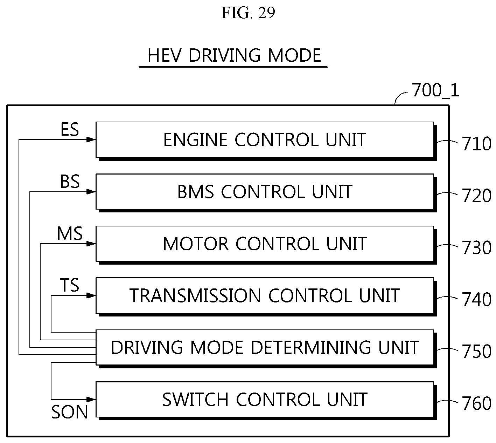

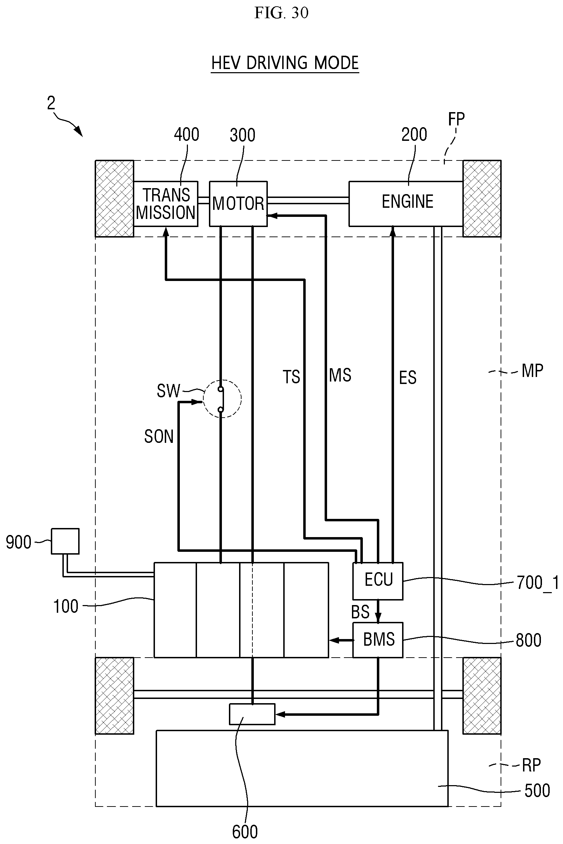

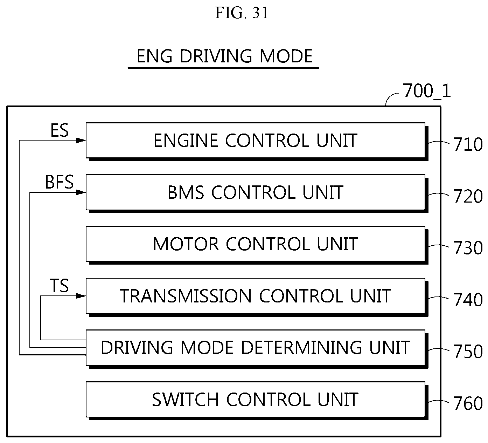

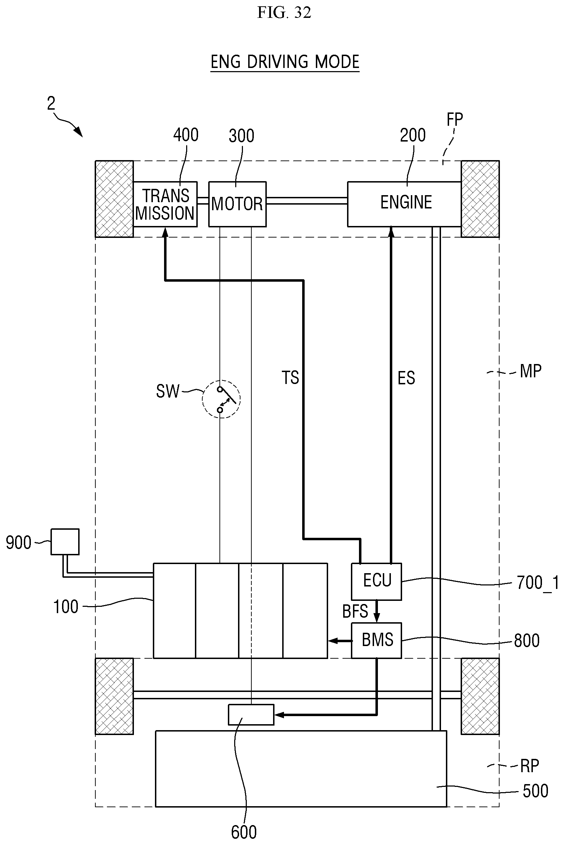

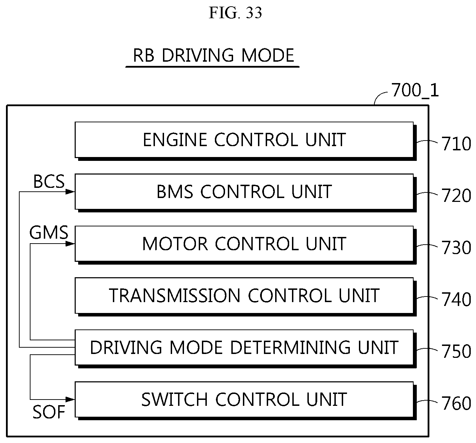

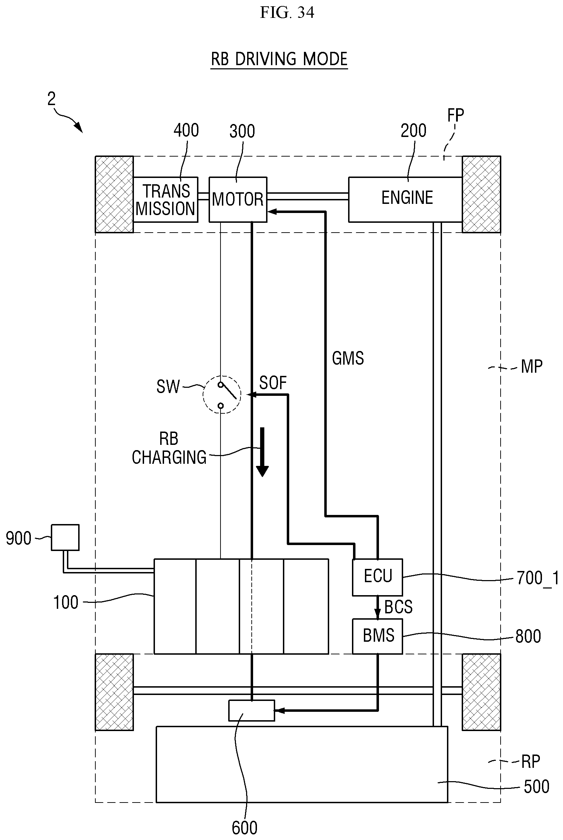

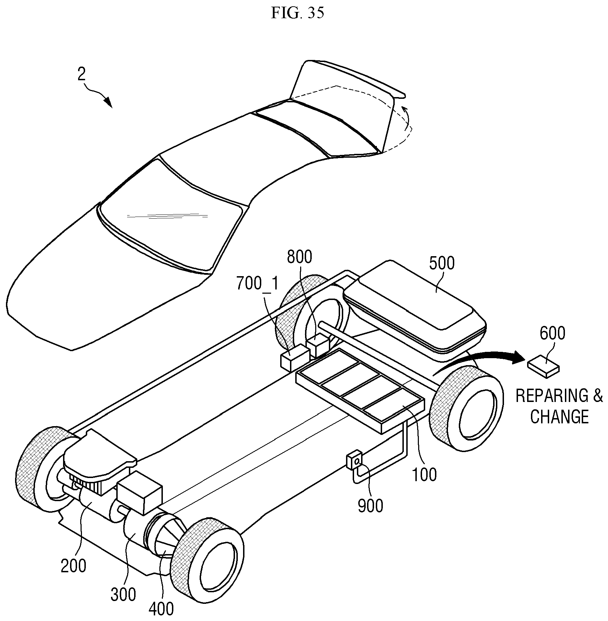

FIG. 24 is an exploded perspective view of a hybrid electric vehicle according to another embodiment. FIG. 25 is a drawing showing in detail the configurations of the hybrid electric vehicle according to FIG. 24. FIG. 26 is a drawing showing the specific configurations of the electric control unit according to FIG. 25. FIG. 27 is a drawing showing the relationships between the components of the electric control unit in an EV driving mode. FIG. 28 is a drawing showing the relationships between the components of the hybrid electric vehicle in an EV driving mode. FIG. 29 is a drawing showing the relationships between the components of the electric control unit in a HEV driving mode. FIG. 30 is a drawing showing the relationships between the components of the hybrid electric vehicle in a HEV driving mode. FIG. 31 is a drawing showing the relationships between the components of the electric control unit in an ENG driving mode. FIG. 32 is a diagram showing the relationships between components of a hybrid electric vehicle in an ENG driving mode. FIG. 33 is a diagram showing the relationships between components of an electric control unit in an RB driving mode. FIG. 34 is a diagram showing the relationships between components of a hybrid electric vehicle in an RB driving mode. FIG. 35 is a schematic diagram showing repair or replacement of the secondary battery in the hybrid electric vehicle according to FIG. 24.

Referring to FIGS. 24 to 35, the hybrid electric vehicle 2 differs from the hybrid electric vehicle 1 according to FIGS. 1 to 23 in that it may further include a second battery 600. Although only one second battery 600 is illustrated, this is not limited thereto and a plurality of second batteries 600 may be provided. For example, N (a natural number greater than or equal to 1) or more second batteries 600 may be provided.

The hybrid electric vehicle 2 may include a first battery 100, an engine (ENGINE, 200), a motor (MOTOR, 300), a transmission (TRANSMISSION, 500), a fuel tank 500, a second battery 600, an electric control unit (ECU, 700_1), a battery management system (BMS, 800), and a plug-in charger 900.

The first battery 100 may be charged through the plug-in charger 900. The first battery 100 may be a plug-in charging type battery. The plug-in charger 900 may receive electric energy from an external electric charging device and supply the electric energy to the first battery 100 to charge the first battery 100. The first battery 100 may be connected to the motor 300. A switch SW may be arranged between the first battery 100 and the motor 300. The first battery 100 may be connected one-way to the motor 300. In this specification, one-way connection may mean that the first battery 100 supplies electric energy to the motor 300, but does not receive electric energy from the motor 300.

The second battery 600 may be connected to the motor 300. The second battery 600 may be a regenerative braking charging battery that is charged in the regenerative braking mode. The second battery 600 may be connected two-way to the motor 300. In this specification, the two-way connection means that the second battery 600 may not only supply the charged electric energy to the motor 300, but also receive the electric energy recovered from the motor 300 in the regenerative braking mode.

The electric control unit 700_1 may control the engine 200, the motor 300, the transmission 400, and the battery management system 800. The electric control unit 700_1 may control the on/off of the switch SW.

The battery management system 800 may control the first battery 100 and the second battery 600. The battery management system 800 may control the output and charging of the first battery 100 and the output and charging of the second battery 600. The battery management system 800 is illustrated as being separately disposed from the first battery 100 and the second battery 600, but is not limited thereto and may be disposed within the first battery 100. For convenience of explanation, the following description will focus on the battery management system 800 being disposed separately outside the first battery 100.

The electric control unit 700_1 may include an engine control unit 710, a BMS control unit 720, a motor control unit 730, a transmission control unit 740, a driving mode determining unit 750, and a switch control unit 760.

The engine control unit 710 may control the engine 200, the BMS control unit 720 may control the battery management system (BMS), the motor control unit 730 may control the motor 300, the transmission control unit 740 may control the transmission 400, and the switch control unit 760 may control the on/off of the switch SW.

The driving mode determining unit 750 may determine the driving mode of the hybrid electric vehicle 2. For example, the driving mode determining unit 750 may determine whether the hybrid electric vehicle 2 is in the EV driving mode (or EV mode), the HEV driving mode (or HEV mode), the ENG driving mode (or ENG mode), or the RB driving mode.

In the EV driving mode, when the driver steps on the accelerator after starting, the engine clutch is opened and the motor 300 is driven using the power of the first battery 100 and the second battery 600. The power of the motor 300 is transmitted through the transmission 400 and the final reduction gear to move the wheels.

Specifically, in the EV driving mode, the driving mode determining unit 750 may determine that the hybrid electric vehicle 2 after starting is in the EV driving mode up to the first speed after starting.

The driving mode determining unit 750 may turn on the BMS control unit 720, the motor control unit 730, the transmission control unit 740, and the switch control unit 760.

The driving mode determining unit 750 may generate a battery control signal BS and transmit it to the BMS control unit 720, generate a motor control signal MS and transmit it to the motor 300, generate a transmission control signal TS and transmit it to the transmission 400, and generate a switch on signal SON and transmit it to the switch control unit 760. In 27, the driving mode determining unit 750 is exemplified as generating and transmitting control signals BS, MS, TS, SON to the BMS control unit 720, the motor control unit 730, the transmission control unit 740, and the switch control unit 760, respectively, but is not limited thereto. That is, each of the BMS control unit 720, the motor control unit 730, the transmission control unit 740, and the switch control unit 760 may generate the above-described control signals BS, MS, TS, SON under the control of the driving mode determining unit 750. For convenience of explanation, the following description will focus on the driving mode determining unit 750 generating and transmitting control signals BS, MS, TS, SON to the BMS control unit 720, motor control unit 730, transmission control unit 740, and switch control unit 760, respectively.

The motor control unit 730 may transmit the generated motor control signal MS to the motor 300. The motor 300 may operate based on the transmitted motor control signal MS.

The BMS control unit 720 may transmit the generated battery control signal BS to the first battery 100 and the second battery 600. The first battery 100 and the second battery 600 may supply power (or electric energy) to the motor 300 based on the battery control signal BS of the BMS control unit 720.

The switch control unit 760 may turn on the switch SW based on the generated switch-on signal (SON). As a result, the first battery 100 and the motor 300 are electrically connected, and the power of the first battery 100 may be transmitted to the motor 300.

The transmission control unit 740 may transmit the generated transmission control signal TS to the transmission 400. The transmission 400 may operate based on the transmitted transmission control signal TS.

The HEV driving mode may be a driving mode in which the speed of the hybrid electric vehicle 2 is higher than or equal to the first speed. In the HEV driving mode, the engine 200 and the motor 300 drive the hybrid electric vehicle 2 together. In the HEV driving mode, the power of the engine 200 and the motor 300 moves the wheels through the transmission 400 and the final reduction gear.

Specifically, in the HEV driving mode, the driving mode determining unit 750 may determine that the driving mode is the HEV driving mode from the first speed or higher.

The driving mode determining unit 750 may turn on the engine control unit 710, the BMS control unit 720, the motor control unit 730, the transmission control unit 740, and the switch control unit 760.

The driving mode determining unit 750 may generate an engine control signal ES and transmit it to the engine control unit 710, generate a battery control signal BS and transmit it to the BMS control unit 720, generate a motor control signal MS and transmit it to the motor 300, generate a transmission control signal TS and transmit it to the transmission 400, and generate a switch on signal SON and transmit it to the switch control unit 760. Although the driving mode determining unit 750 is exemplified as generating and transmitting control signals ES, BS, MS, TS, SON to the engine control unit 710, the BMS control unit 720, the motor control unit 730, the transmission control unit 740, and the switch control unit 760, respectively, it is not limited thereto. That is, each of the engine control unit 710, the BMS control unit 720, the motor control unit 730, the transmission control unit 740, and the switch control unit 760 may generate the above-described control signals MS, BS, MS, TS, SON under the control of the driving mode determining unit 750. For convenience of explanation, the following description will focus on the driving mode determining unit 750 generating and transmitting control signals MS, BS, MS, TS, SON to the engine control unit 710, BMS control unit 720, motor control unit 730, transmission control unit 740, and switch control unit 760, respectively.

The BMS control unit 720 may transmit the generated battery control signal BS to the first battery 100 and the second battery 600. The first battery 100 and the second battery 600 may supply power (or electric energy) to the motor 300 based on the battery control signal BS of the BMS control unit 720.

The switch control unit 760 may turn on the switch SW based on the generated switch-on signal SON. As a result, the first battery 100 and the motor 300 are electrically connected, and the power of the first battery 100 may be transmitted to the motor 300.

The transmission control unit 740 may transmit the generated transmission control signal TS to the transmission 400. The transmission 400 may operate based on the transmitted transmission control signal TS.

The ENG driving mode may be a driving mode when the speed of the hybrid electric vehicle 2 is higher than or equal to the second speed. In the ENG driving mode, only the engine 200 drives the hybrid electric vehicle 2. In the ENG driving mode, the power of the engine 200 moves the wheels through the transmission 400 and the final reduction gear.

Specifically, in the ENG driving mode, the driving mode determining unit 750 may determine that the driving mode is the ENG driving mode from the second speed or higher.

The driving mode determining unit 750 may turn on the engine control unit 710 and the transmission control unit 740, and turn off the BMS control unit 720 and the motor control unit 730. In the ENG driving mode, since the power supply to the first battery 100 and the second battery 600 is cut off by the BMS control unit 720, the switch SW may not need to be turned off, but is not limited thereto, and the switch SW may be turned off by the driving mode determining unit 750.

The driving mode determining unit 750 may generate an engine control signal ES and transmit it to the engine control unit 710, generate a battery off signal BFS and transmit it to the BMS control unit 720, and generate a transmission control signal TS and transmit it to the transmission 400. Although the driving mode determining unit 750 does not illustrate as generating a motor off signal to turn off the motor 300 and transmitting it to the motor control unit 730, if the driving mode determining unit 750 does not transmit the motor control signal MS to the motor control unit 730, the motor 300 may be turned off. However, the present disclosure is not limited thereto, and the driving mode determining unit 750 may separately generate a motor off signal to turn off the motor 300 and transmit it to the motor control unit 730, and the motor 300 may be turned off based on the motor off signal received from the motor control unit 730.

Although it is exemplified that the driving mode determining unit 750 generates and transmits control signals ES, BFS, TS to the engine control unit 710, the BMS control unit 720, and the transmission control unit 740, respectively, it is not limited thereto. That is, each of the engine control unit 710, the BMS control unit 720, and the transmission control unit 740 may generate the above-described control signals BS, BFS, TS under the control of the driving mode determining unit 750. In the following, for the convenience of explanation, the driving mode determining unit 750 will be described focusing on generating and transmitting control signals ES, BFS, TS to the engine control unit 710, the BMS control unit 720, and the transmission control unit 740, respectively.

The engine control unit 710 may transmit the generated engine control signal ES to the engine 200. The engine 200 may operate based on the transmitted engine control signal ES.

The BMS control unit 720 may transmit the generated battery off signal BFS to the first battery 100 and the second battery 600. The first battery 100 and the second battery 600 may not provide power to the motor 300 based on the battery off signal BFS of the BMS control unit 720.

The transmission control unit 740 may transmit the generated transmission control signal TS to the transmission 400. The transmission 400 may operate based on the transmitted transmission control signal TS.

The RB driving mode may be a mode that is activated in the braking mode of the hybrid electric vehicle 2.

The RB driving mode may refer to a mode that recovers some of the kinetic energy (or mechanical power) lost in the braking mode and converts it into electrical energy (or electric power). However, since the RB driving mode is a mode that is activated in a sudden environment, the conversion of kinetic energy into electrical energy and the charging of the electric energy into the battery in the RB driving mode may occur intermittently. However, if the battery is charged intermittently, the performance and lifespan of the battery may deteriorate.

In the RB driving mode, the motor 300 may operate as a generator instead of converting electric energy (or electric power) into kinetic energy (or mechanical power). That is, the motor 300 may convert kinetic energy (or mechanical power) into electric energy (or electric power).

Specifically, in the RB driving mode, the driving mode determining unit 750 may determine that the hybrid electric vehicle 2 is in the RB driving mode when braking.

The driving mode determining unit 750 may turn on the BMS control unit 720, the motor control unit 730, and the switch control unit 760, and turn off the transmission control unit 740 and the engine control unit 710.

The driving mode determining unit 750 may generate a battery charging signal BCS and transmit it to the BMS control unit 720, generate a motor generating signal GMS and transmit it to the motor control unit 730, and generate a switch off signal SOF and transmit it to the switch control unit 760. Although the driving mode determining unit 750 does not illustrate as generating a motor off signal for turning off the engine 200 and transmitting it to the engine control unit 710, and generating a transmission off signal for turning off the transmission 400 and transmitting it to the transmission control unit 740, if the driving mode determining unit 750 does not transmit the engine control signal ES and the transmission control signal TS to the engine control unit 710 and the transmission control unit 740, respectively, the engine 200 and the transmission 400 may be turned off. However, without being limited thereto, the driving mode determining unit 750 may separately generate an engine off signal and a transmission off signal to turn off the engine 200 and the transmission 400 and transmits them to the engine control unit 710 and the transmission control unit 740, respectively, and the engine 200 and the transmission 400 may be turned off based on the engine off signal and the transmission off signal received from the engine control unit 710 and the transmission control unit 740, respectively.

Although it is exemplified that the driving mode determining unit 750 generates and transmits the control signals BCS, GMS, SOF to the BMS control unit 720, the motor control unit 730, and the switch control unit 760, it is not limited thereto. That is, the BMS control unit 720, the motor control unit 730, and the switch control unit 760 may generate the above-described control signals BCS, GMS, SOF, respectively, under the control of the driving mode determining unit 750. In the following, for the convenience of explanation, the driving mode determining unit 750 will be described focusing on generating and transmitting the control signals BCS, GMS, SOF to the BMS control unit 720, the motor control unit 730, and the switch control unit 760, respectively.

The BMS control unit 720 may transmit the generated battery charging signal BCS to the second battery 600. The second battery 600 may charge (RB CHARGING) the electric energy (or electric power) generated from the motor 300 based on the transmitted battery charging signal BCS. It is illustrated that the BMS control unit 720 does not transmit the generated battery charging signal BCS to the first battery 100. However, the present disclosure is not limited thereto, and the BMS control unit 720 may transmit the generated battery charging signal BCS to the first battery 100. In this case, as described above, since the switch SW between the first battery 100 and the motor 300 is turned off by the switch control unit 760, in the RB driving mode, the first battery 100 is not electrically connected to the motor 300, and the electric energy (or electric power) generated by the motor 300 may not be charged to the first battery 100.

The motor control unit 730 may transmit the generated motor generating signal GMS to the motor 300. The motor 300 may convert the motor 300 into a generator and operate it based on the motor generating signal GMS of the motor control unit 730. The motor 300 may recover some of the kinetic energy (or mechanical power) lost in the RB braking mode and convert it into electric energy (or electric power). The motor 300 may transmit the converted electric energy (or electric power) to the second battery 600.

The hybrid electric vehicle 2 according to another embodiment may include a first battery 100 that is charged by a plug-in charging method as described above and a second battery 600 that is independently arranged from the first battery 100, and the second battery 600 may be a battery that is charged by a regenerative braking charging method in the RB driving mode. In other words, the first battery 100 supplies electric energy (or electric power) to the motor 300, but does not receive electric energy recovered by the motor 300, so that it may be connected in one direction to the motor 300, and the second battery 600 may be connected in two directions to the motor 300. The RB driving mode is a mode that recovers some of the kinetic energy lost in the braking mode and converts it into electric energy, and since it is a mode that is activated in a sudden environment, the conversion of kinetic energy into electric energy and the charging of the electric energy into the battery in the RB driving mode may occur intermittently. If the battery is charged intermittently, the performance and lifespan of the battery may deteriorate.

The hybrid electric vehicle 2 according to another embodiment may be configured such that the first battery 100, which primarily supplies electric energy to the motor 300, does not receive electric energy recovered by the motor 300 in the RB driving mode, while the electric energy recovered by the motor 300 is entirely charged to the separately provided second battery 600. This minimizes degradation in the performance and lifespan of the first battery 100.

In addition, the first battery 100 may have a large area due to its large capacity. On the other hand, since the second battery 600 is charged in the RB driving mode, it may have a smaller capacity and area compared to the first battery 100. Therefore, the installation location of the second battery 600 may be much freer than that of the first battery 100. For example, as described above, the first battery 100 must be located in the middle part MP of the hybrid electric vehicle 2 due to its large capacity and area. If the first battery 100 is located in the middle part MP of the hybrid electric vehicle 2, the entire lower frame of the hybrid electric vehicle 2 must be removed to extract the first battery 100, which may make repair and replacement of the first battery 100 very difficult. However, since the installation location of the second battery 600 is much freer than that of the first battery 100, it may be located in the rear portion RP of the hybrid electric vehicle 2. Although the second battery 600 is exemplified as being located between the rear wheel and the fuel tank 500, it is not limited thereto. That is, since the second battery 600 may be easily extracted from the hybrid electric vehicle 2, even if the performance and lifespan of the second battery 600 deteriorate, it may be easily replaced and repaired.

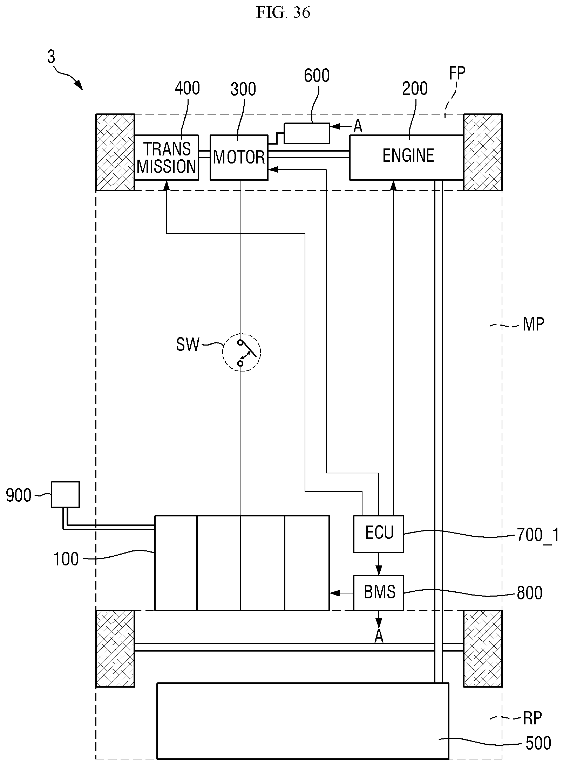

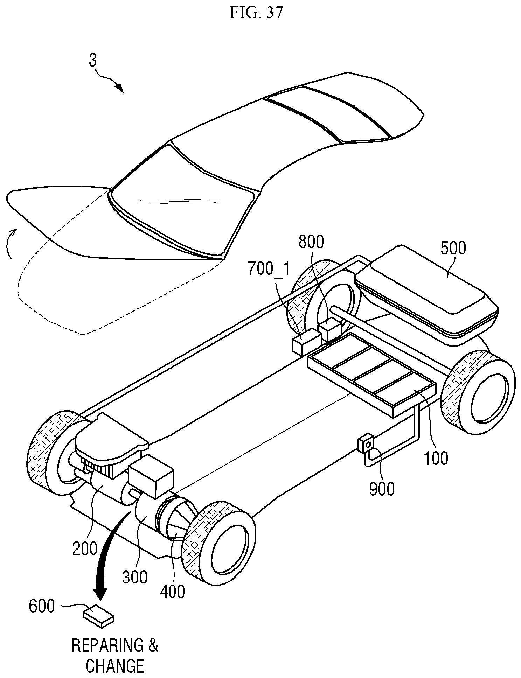

FIG. 36 is a diagram showing in detail the components of a hybrid electric vehicle 3 according to still another embodiment. FIG. 37 is a schematic diagram showing repair or replacement of a secondary battery 600 in the hybrid electric vehicle 3 according to FIG. 36.

Referring to FIGS. 36 and 37, the second battery 600 of the hybrid electric vehicle 3 according to still another embodiment may be located in the front portion FP. And, as described above, the second battery 600 may be connected to the motor 300 and the battery management system (BMS, 800). When the bonnet of the hybrid electric vehicle 3 is opened, the second battery 600 may be easily extracted from the hybrid electric vehicle 3. Accordingly, in the RB driving mode, even if the performance and lifespan of the second battery 600 being charged are degraded, it may be easily replaced (CHANGE) and repaired (REPAIRING).

According to various embodiments of the present specification, if the degradation determining unit determines that the battery is abnormally degraded, the second speed may be lowered to a third reference rate, and if the battery is determined to be completely degraded, the second speed may be lowered to a fourth reference rate, and the fourth reference rate may be greater than the third reference rate.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

All simple modifications or changes of the present disclosure fall within the scope of the present disclosure, and the specific scope of protection of the present disclosure will be made clear by the appended claims.

### (Explanation of reference signs)

1, 2, 3: hybrid electric vehicle
100: first battery
200: engine
300: motor
400: transmission
500: fuel tank
600: second battery
700, 700_1: electronic control device
800: battery management device

## Claims

1. A hybrid electric vehicle, comprising:
a plug-in rechargeable battery;
a regenerative braking rechargeable battery;
a motor connected to the plug-in rechargeable battery and the regenerative braking rechargeable battery, respectively; and
an engine connected to the motor,
wherein the plug-in rechargeable battery and the regenerative braking rechargeable battery are arranged to be spaced.

2. The hybrid electric vehicle according to claim 1, wherein in a regenerative braking mode, the motor operates as a generator by recovering rotational energy of the engine, and electric energy generated from the motor in the regenerative braking mode is charged to the regenerative braking rechargeable battery.

3. The hybrid electric vehicle according to claim 2, wherein in the regenerative braking mode, the electric energy is not supplied to the plug-in rechargeable battery.

4. The hybrid electric vehicle according to claim 1, wherein the plug-in rechargeable battery is connected one-way to the motor, and the regenerative braking rechargeable battery is connected two-way to the motor.

5. A hybrid electric vehicle having an EV driving mode and a HEV driving mode, the hybrid electric vehicle comprising:
a motor;
a battery configured to output electric energy to the motor; and
an engine connected to the motor,
wherein in the EV driving mode, the motor operates up to a first speed of the vehicle,
wherein in the HEV driving mode, the motor and the engine operate from the first speed to a second speed, and
wherein the first speed and the second speed are variable.

6. The hybrid electric vehicle according to claim 5, further comprising an electronic control device configured to control the motor, the battery, and the engine,
wherein the electronic control device varies the first speed and the second speed based on a power mode of the battery.

7. The hybrid electric vehicle according to claim 6, further comprising a battery management device configured to determine the power mode of the battery.

8. The hybrid electric vehicle according to claim 6, wherein the electronic control device maintains the first speed and the second speed when the power mode of the battery is a normal mode.

9. The hybrid electric vehicle according to claim 6, wherein the electronic control device lowers the first speed and the second speed to a first reference rate when the power mode of the battery is a warning mode.

10. The hybrid electric vehicle according to claim 6, wherein the electronic control device lowers the first speed and the second speed to a second reference rate that is greater than a first reference rate when the power mode of the battery is an emergency mode.

11. The hybrid electric vehicle according to claim 5, further comprising an ENG driving mode in which the engine operates from the second speed.
